# EUROPEAN PATENT APPLICATION

(11) **EP 1 291 945 A1**
(43) Date of publication of application: **12.03.2003**
(21) Application number: 01934508.1
(22) Date of filing: 01.06.2001
(51) Int. Cl.: H01M 8/02, H01M 8/24, H01M 4/86

(54) **FUEL BATTERY**

(30) Priority: 02.06.2000 JP 2000165954
(71) Applicant: Sony Corporation, Tokyo 141-0001 (JP)
(72) Inventor: MIYAKOSHI, Mitsuaki, Shinagawa-ku, Tokyo 141-0001 (JP); MIYAZAWA, Hiroshi, Shinagawa -ku, Tokyo 141-0001 (JP); WATANABE, Tomikazu, Shinagawa-ku, Tokyo 141-0001 (JP)
(74) Representative: Körber, Wolfhart, Dr. rer.nat.
(86) International application number: JP0104671
(87) International publication number: WO01093357

(57) **Abstract**

A fuel cell including at least one unit fuel cell including a hydrogen gas path forming plate (6) having a plurality of openings (9), (12) and (13), an oxygen electrode plate (1) having a proton conductor film (45) and a plurality of openings (22), (23) and an air flow path forming plate (26) having a plurality of openings (21), the hydrogen gas path forming plate, oxygen electrode plate and the air flow path forming plate layered together in this order; at least two selectively disconnectable interconnection pins A, B, C, D, E, F, G and H being formed on a peripheral portion of the hydrogen electrode plate (1) and on a peripheral portion of the oxygen electrode plate (21). A fuel cell for generating desired electromotive force is formed by severing plural interconnection pins and by internally connecting plural unit fuel cells through other interconnection pins.

## Description

### Technical Field

This invention relates to a fuel cell. More particularly, it relates to a fuel cell in which plural unit fuel cells as units are internally connected together to generate desired electromotive force as well as to reduce the size or thickness of the cell.

### Background Art

Up to now, fossil fuels, such as gasoline or light oil, have been used extensively not only as an energy source for automobiles, but also as an energy source for power generation. Through the use of these fossil fuels, the mankind could enjoy such benefits as drastically improved life level or industrial development. On the other hand, the earth is imperiled by a serious risk of environmental destruction. Moreover, the resources of fossil fuel tend to be depleted such that difficulties are feared to be met as to stable supply of fossil fuel over a long term.

Hydrogen is attracting attention as an energy source which is to take the place of the fossil fuel. Hydrogen is contained in water and exists abundantly on the earth, while a large amount of chemical energy is contained per unit weight therein. Moreover, when used as an energy source, hydrogen does not yield obnoxious materials or gases tending to produce global warming. For these reasons, hydrogen is attracting significant attention as being an energy source which is to take the place of the fossil fuel and which is clean and plentiful in supply.

Recently, studies and developments in the fuel cell, capable of taking an electrical energy from the hydrogen energy, are going on briskly, such that expectations are made for application of the fuel cell to large-scale power generation or on-site self-generation, or as a power source for automobiles.

A fuel cell for taking the electrical energy from the hydrogen energy includes a hydrogen electrode fed with a hydrogen gas and an oxygen electrode fed with oxygen. A hydrogen gas fed to the hydrogen electrode is dissociated by catalyst action into protons and electrons. The electrons are absorbed by a hydrogen electrode, whilst the protons are transported to the oxygen electrode. The electrons absorbed in the oxygen electrode are migrated through a load to the oxygen electrode. On the other hand, oxygen fed to the oxygen electrode is combined by the catalyst action with the protons and electrons migrated from the hydrogen electrode to yield water. Thus, a unit fuel cell is constructed so that an electromotive force is generated between the hydrogen electrode and the oxygen electrode to cause the current to flow through the load.

Such fuel cell is preferably so constructed that a plural number of such unit fuel cells are internally connected in a desired manner to generate desired electromitive foce. If special interconnections are used for internally connecting a plural number of the unit fuel cells, there is raised a problem that difficulties are met in reducing the size or the thickness of fuel cell.

### Disclosure of the Invention

It is an object of the present invention to provide a novel fuel cell capable of overcoming the aforementioned problems inherent in the prior art.

It is another object of the present invention to provide a fuel cell formed by internally connecting a plural number of unit fuel cells together to generate desired electromotive force as well as to enable the size or the thickness of the cell to be reduced.

For accomplishing the above object, the present invention provides a fuel cell including at least one unit fuel cell including a hydrogen gas path forming plate having a plurality of openings, an oxygen electrode plate having a proton conductor film and a plurality of openings, and an air flow path forming plate having a plurality of openings, with the hydrogen gas path forming plate, oxygen electrode plate and the air flow path forming plate layered together in this order, at least two selectively disconnectable connection pins being formed on a peripheral portion of the hydrogen electrode plate and on a peripheral portion of the oxygen electrode plate.

In the fuel cell of the present invention, at least two selectively rupturable connection pins are formed on the peripheral portions of the hydrogen electrode plate and the oxygen electrode plate making up the unit fuel cell, so that, by selectively rupturing or leaving at least two connection pins, similarly selectively rupturing or leaving at least two connection pins formed on the peripheral portions of the hydrogen electrode plate and the oxygen electrode plate making up another unit fuel cell, and by abutting the connection pins, left intact, against one another, a fuel cell may be obtained having two or more unit fuel cells connected internally to one another.

The proton conductor film forming the fuel cell according to the present invention contains a proton conductor containing, as a main component, a fullerene derivative having a group capable of dissociating protons introduced into carbon atoms making up the fullerene molecules.

Preferably, the group capable of dissociating protons is composed of -XH, where X is an optional atom or a group of atoms having divalent bonds.

More preferably, the group capable of dissociating protons is a group selected from the group consisting of-OH or -YH, where Y is an optional atom or a group of atoms having divalent bonds.

More preferably, the group capable of dissociating protons is selected from the group consisting of -OH, -SO₃H₄, -COOH, -SO₃H and -OPO(OH)₃.

The fullerene derivative is composed of polyfullerene hydroxide (fullerenol).

The proton conductor contains electrophilic groups introduced into carbon atoms making up the fullerene molecules, in addition to the groups capable of dissociating protons.

The electrophilic groups may include a nitro group, a carbonyl group, a carboxylic group, a nitrile group, a halogrenated alkyl group or a group containing halogen atoms.

The proton conductor film used in the present invention may include a proton conductor composed of perfluorosulfonic acid resin (Nafion manufactured by Du Pont of USA (registered trademark)).

According to the present invention, the fullerene molecules mean spherically-shaped carbon cluster molecules having 30, 60, 70, 78, 82 or 84 carbon atoms.

In the fuel cell of the present invention, the hydrogen electrode plate and the oxygen electrode plate are substantially rectangular in profile, with the interconnection pins being formed on at least one side of each of the hydrogen electrode plate and the oxygen electrode plate. More preferably, the hydrogen electrode plate and the oxygen electrode plate are substantially rectangular in profile, with the interconnection pins being formed on the four sides of the hydrogen electrode plate and the oxygen electrode plate.

With the above-described structure of the fuel cell of the present invention, a fuel cell may be provided in which the unit fuel cells are internally connected with a larger number of the degrees of freedom.

In a further fuel cell according the present invention, at least two interconnection pins formed on the peripheral portion of the hydrogen electrode plate and at least two interconnection pins formed on the peripheral portion of the oxygen electrode plate are formed in a case in which two of the unit fuel cells are apposed together, the at least two interconnection pins formed on the peripheral portion of the hydrogen electrode plate and on the peripheral portion of the oxygen electrode plate are severed selectively, so that the at least two interconnection pins formed on the peripheral portion of the hydrogen electrode plate of one of the unit fuel cells and the at least two interconnection pins formed on the peripheral portion of the hydrogen electrode plate of the other one of the unit fuel cells are connected electrically and the at least two interconnection pins formed on the peripheral portion of the oxygen electrode plate of one of the unit fuel cells and the at least two interconnection pins formed on the peripheral portion of the oxygen electrode plate of the other one of the unit fuel cells are connected electrically.

In the fuel cell according the present invention, the at least two interconnection pins formed on the peripheral portion of the hydrogen electrode plate and at least two interconnection pins formed on the peripheral portion of the oxygen electrode plate are formed in a case in which two of the unit fuel cells are apposed together, the at least two interconnection pins formed on the peripheral portion of the hydrogen electrode plate and on the peripheral portion of the oxygen electrode plate are severed selectively, so that the at least two interconnection pins formed on the peripheral portion of the hydrogen electrode plate of one of the unit fuel cells and the at least two interconnection pins formed on the peripheral portion of the hydrogen electrode plate of the other one of the unit fuel cells are connected electrically and the at least two interconnection pins formed on the peripheral portion of the oxygen electrode plate of one of the unit fuel cells and the at least two interconnection pins formed on the peripheral portion of the oxygen electrode plate of the other one of the unit fuel cells are connected electrically. So, two unit fuel cells can be connected in parallel with each other, without employing any special wiring, measly on selectively rupturing at least two interconnection pins formed on the peripheral portions of the hydrogen electrode plate and the oxygen electrode plate making up each of the unit fuel cells juxtaposed to each other.

These at least two interconnection pins, formed on the peripheral portion of the hydrogen electrode plate and the oxygen electrode plate, may be selectively rupturable while being selectively bendable.

In a further fuel cell according to the present invention, at least two interconnection pins formed on the peripheral portion of the hydrogen electrode plate and at least two interconnection pins formed on the peripheral portion of the oxygen electrode plate are formed in a case in which two of the unit fuel cells are apposed together, the at least two interconnection pins formed on the peripheral portion of the hydrogen electrode plate and on the peripheral portion of the oxygen electrode plate are severed or bent selectively, so that the at least two interconnection pins formed on the peripheral portion of the hydrogen electrode plate of one of the unit fuel cells and the at least two interconnection pins formed on the peripheral portion of the hydrogen electrode plate of the other one of the unit fuel cells are connected electrically and the at least two interconnection pins formed on the peripheral portion of the oxygen electrode plate of one of the unit fuel cells and the at least two interconnection pins formed on the peripheral portion of the oxygen electrode plate of the other one of the unit fuel cells are connected electrically.

In the fuel cell according to the present invention, at least two interconnection pins formed on the peripheral portion of the hydrogen electrode plate and at least two interconnection pins formed on the peripheral portion of the oxygen electrode plate are formed in a case in which two of the unit fuel cells are apposed together, the at least two interconnection pins formed on the peripheral portion of the hydrogen electrode plate and on the peripheral portion of the oxygen electrode plate are severed or bent selectively, so that the at least two interconnection pins formed on the peripheral portion of the hydrogen electrode plate of one of the unit fuel cells and the at least two interconnection pins formed on the peripheral portion of the hydrogen electrode plate of the other one of the unit fuel cells are connected electrically and the at least two interconnection pins formed on the peripheral portion of the oxygen electrode plate of one of the unit fuel cells and the at least two interconnection pins formed on the peripheral portion of the oxygen electrode plate of the other one of the unit fuel cells are connected electrically. So, two unit fuel cells can be connected in parallel with each other, in desired manner, without employing any special wiring, measly on selectively rupturing or bending at least two interconnection pins formed on the peripheral portions of the hydrogen electrode plate and the oxygen electrode plate making up each of the unit fuel cells juxtaposed to each other.

In a further fuel cell according to the present invention, at least two interconnection pins formed on the peripheral portion of the hydrogen electrode plate and at least two interconnection pins formed on the peripheral portion of the oxygen electrode plate are formed in a case in which two of the unit fuel cells are stacked together with the hydrogen gas flow path forming plate in common, the at least two interconnection pins formed on the peripheral portion of the hydrogen electrode plate and on the peripheral portion of the oxygen electrode plate are bent selectively, so that the at least two interconnection pins formed on the peripheral portion of the hydrogen electrode plate of one of the unit fuel cells and the at least two interconnection pins formed on the peripheral portion of the hydrogen electrode plate of the other one of the unit fuel cells are connected electrically and the at least two interconnection pins formed on the peripheral portion of the oxygen electrode plate of one of the unit fuel cells and the at least two interconnection pins formed on the peripheral portion of the oxygen electrode plate of the other one of the unit fuel cells are connected electrically.

In the fuel cell of the present invention, the at least two interconnection pins formed on the peripheral portion of the hydrogen electrode plate and at least two interconnection pins formed on the peripheral portion of the oxygen electrode plate are formed in a case in which two of the unit fuel cells are stacked together with the hydrogen gas flow path forming plate in common, the at least two interconnection pins formed on the peripheral portion of the hydrogen electrode plate and on the peripheral portion of the oxygen electrode plate are bent selectively, so that the at least two interconnection pins formed on the peripheral portion of the hydrogen electrode plate of one of the unit fuel cells and the at least two interconnection pins formed on the peripheral portion of the hydrogen electrode plate of the other one of the unit fuel cells are connected electrically and the at least two interconnection pins formed on the peripheral portion of the oxygen electrode plate of one of the unit fuel cells and the at least two interconnection pins formed on the peripheral portion of the oxygen electrode plate of the other one of the unit fuel cells are connected electrically. So, two unit fuel cells can be connected in parallel with each other, in desired manner, without employing any special wiring, measly on selectively bending at least two interconnection pins formed on the peripheral portions of the hydrogen electrode plate and the oxygen electrode plate making up each of the unit fuel cells juxtaposed to each other.

The fuel cell according to the present invention may also include a module retention plate having a plurality of openings, the module retention plate being provided on the opposite side of the air flow path forming plate forming the unit fuel cell with respect to the oxygen electrode plate.

In the fuel cell according to the present invention, the hydrogen gas flow path forming plate may be of a thickness of 0.01 mm to 1 mm, the hydrogen electrode plate may be of a thickness of 0.01 mm to 1 mm, the air flow path forming plate may be of a thickness of 0.01 mm to 0.5 mm and the oxygen electrode plate may be of a thickness of 0.01 mm to 1 mm.

The hydrogen gas flow path forming plate may be formed of a material selected from the group consisting of polycarbonate, acrylic resin, ceramics, carbon, hastelloy, stainless steel, nickel, molybdenum, copper, aluminum, iron, silver, gold, platinum, tantalum and titanium.

The hydrogen electrode plate may be formed of a material selected from the group consisting of hastelloy, stainless steel, nickel, molybdenum, copper, aluminum, iron, silver, gold, platinum, tantalum and titanium and alloys of two or more of the materials.

The air flow path forming plate is plate may be formed of a material selected from the group consisting of polycarbonate, acrylic resin, ceramics, carbon, hastelloy, stainless steel, nickel, molybdenum, copper, aluminum, iron, silver, gold, platinum, tantalum and titanium.

The oxygen electrode plate may be formed of a material selected from the group consisting of hastelloy, stainless steel, nickel, molybdenum, copper, aluminum, iron, silver, gold, platinum, tantalum and titanium and alloys of two or more of the materials.

Other objects, features and advantages of the present invention will become more apparent from reading the embodiments of the present invention as shown in the drawings.

### Brief Description of the Drawings

Fig.1 is a plan view showing a hydrogen electrode plate of a unit fuel cell constituting a fuel cell according to the present invention.
Fig.2 is a plan view showing a hydrogen gas flow path forming plate unit fuel cell constituting a fuel cell according to the present invention.
Fig.3 is a plan view of a layered product on laminating the hydrogen gas flow path forming plate on the hydrogen electrode plate.
Fig.4 is a cross-sectional view taken along line IV to IV of Fig.3.
Fig.5 is a plan view showing an oxygen electrode plate of the unit fuel cell constituting a fuel cell according to the present invention.
Fig.6 is a plan view showing an air flow path forming plate unit fuel cell constituting a fuel cell according to the present invention.
Fig.7 is a bottom plan view of a layered product on laminating the oxygen gas flow path forming plate on the hydrogen electrode plate.
Fig.8 is a plan view showing a module retention plate of the unit fuel cell constituting a fuel cell according to the present invention.
Fig.9 is a plan view showing a layered product formed on tightly bonding the module retention plate to the air flow path forming plate.
Fig.10 is a cross-sectional view taken along line X-X of Fig.9.
Fig.11 is a schematic cross-sectional view showing the state of communication between an opening formed in the hydrogen gas flow path forming plate and an opening formed in the hydrogen electrode plate and the state of communication between an opening formed in the oxygen electrode plate and an opening formed in the air flow path forming plate in the fuel cell according to the present invention.
Fig.12 is a cross-sectional view showing another embodiment of the fuel cell according to the present invention and showing the state of communication between openings formed in respective components making up the fuel cell.
Fig.13 is a side view showing a further embodiment of the fuel cell according to the present invention.
Fig. 14 is a plan view showing the further embodiment of the fuel cell according to the present invention.

### Best Mode for Carrying out the Invention

Referring to the drawings, preferred embodiments of the present invention are explained in detail.

A hydrogen electrode plate 1 of the unit fuel cell, forming the fuel cell according to the present invention, is formed by a substantially square-shaped plate member formed of a stainless steel. The thickness of a plate member forming the hydrogen electrode plate 1 is set to 0.01 mm to 1.0 mm.

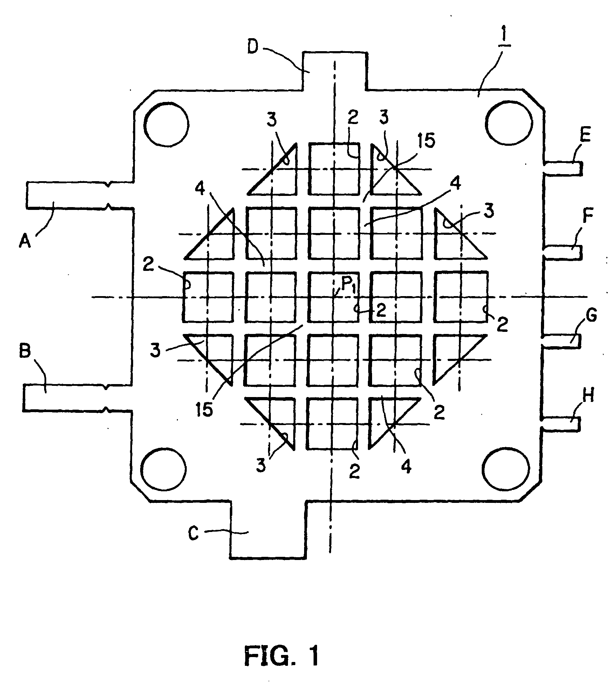

Referring to Fig.1, the hydrogen electrode plate 1 is formed by a lattice 4 having a regular array of 13 square-shaped openings 2 and eight triangular openings 3. The eight triangular openings 3 are arranged on the periphery, whereas, of the 13 square-shaped openings 2, the central opening 2 is formed in coincidence with the center P1 of the hydrogen electrode plate 1.

In Fig.1, A to H are pins for connection across the electrodes, and are formed each to an elongated rectangular shape.

A hydrogen gas flow path forming plate 6 of the unit fuel cell constituting the fuel cell according to the present invention is formed by a substantially square-shaped plate member formed of polycarbonate. In the present embodiment, the thickness of the plate member forming the hydrogen gas flow path forming plate 6 is set to 0.1 mm to 1.0 mm. However, the plate member having a thickness of 0.1 mm to 1.0 mm may be used for forming the hydrogen gas flow path forming plate 6.

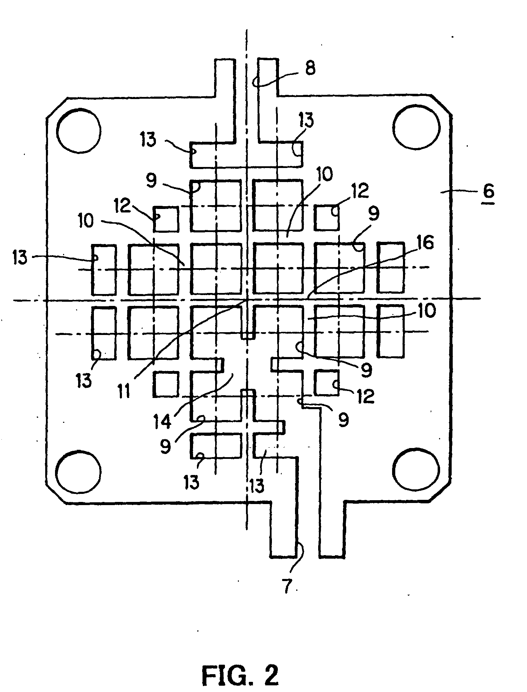

In one end of the hydrogen gas flow path forming plate 6 is formed a first cut-out 7 forming a hydrogen gas supplying unit, whereas, in the opposite end thereof, a second cut-out 8 forming a hydrogen gas ejection unit is formed, as shown in Fig.2. In the hydrogen gas flow path forming plate 6, there are formed 12 square-shaped openings 8 to the same size by a lattice 10. Of the 12 square-shaped openings 9, the square-shaped opening 9 communicating with the first cut-out 7 and three square-shaped openings neighboring thereto have respective top corner portions cut out to provide for communication of the respective openings with one another, so that a sole opening 14 is formed by the four square-shaped openings 9.

Referring to Figs.1 and 2, the square-shaped opening 2 formed in the hydrogen electrode plate 1 and the square-shaped opening 9 formed in the hydrogen gas flow path forming plate 6 are of the same shape and size. The square-shaped opening 2, formed centrally of the hydrogen electrode plate 1, has its center P1 formed in coincidence with the center of the hydrogen electrode plate 1, while no opening is formed centrally of the hydrogen gas flow path forming plate 6, but the square-shaped openings 9 are formed in the hydrogen gas flow path forming plate 6 so that a point of intersection 11 of the lattice 10 forming the four centrally located square-shaped openings 9 will be in coincidence with the center P1 of the hydrogen gas flow path forming plate 6.

In the hydrogen gas flow path forming plate 6, four square-shaped openings 12 of smaller size and eight rectangular openings 13 are formed by a lattice 10, as shown in Fig.2. Of the eight rectangular openings 13, the two rectangular openings 13, neighboring to the first cut-out 7, communicate with each other, while the sides thereof neighboring to the first cut-out 7 are cut out to provide for communication with the first cut-out 7. On the other hand, the rectangular opening 13 neighboring to the second cut-out 8 has its side neighboring to the second cut-out 8 cut out to provide for communication with the second cut-out 8.

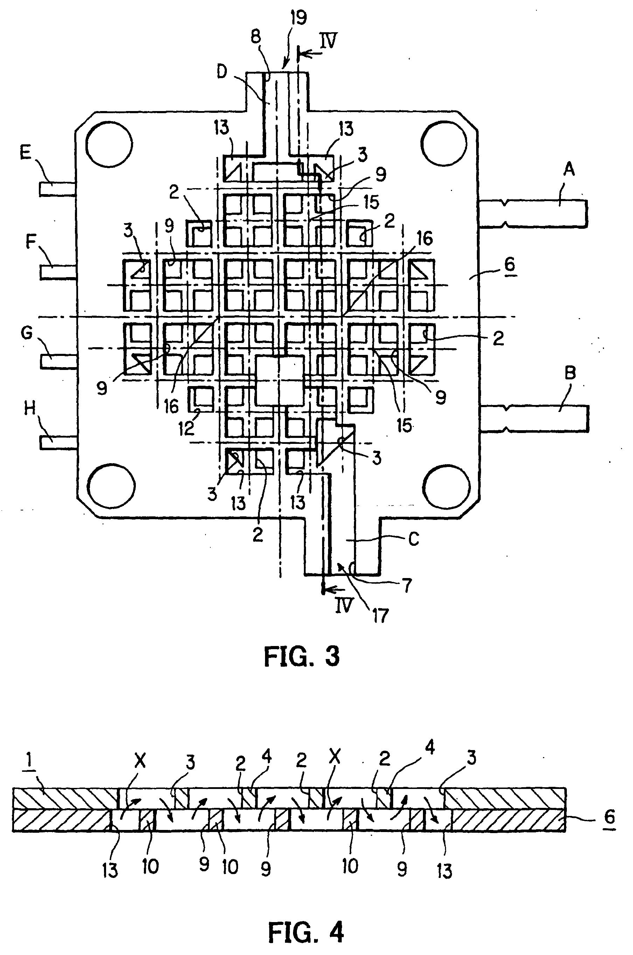

On the hydrogen gas flow path forming plate 6 is superposed the hydrogen electrode plate 1, as shown in the bottom view of Fig.3, to constitute a layered assembly. Fig.4 is a schematic cross-sectional view taken along line IV-IV of Fig.3.

The hydrogen gas flow path forming plate 6 is superposed on and tightly bonded to the hydrogen electrode plate 1, so that the points of intersection 15 of the lattice 4 forming the square-shaped openings 2 and the square-shaped openings 3 of the hydrogen electrode plate 1 will be in coincidence with the center of the square-shaped openings 9 formed in the hydrogen gas flow path forming plate 6, and so that the points of intersection 16 of a lattice 10 forming the small-sized square-shaped openings 12 and the rectangular openings 13 of the hydrogen gas flow path forming plate 6 will be in coincidence with the center of the square-shaped opening 2 formed in the hydrogen electrode plate 1, when the hydrogen electrode plate 1 is superposed on the hydrogen gas flow path forming plate 6, as shown in Fig.3.

The result is that the square-shaped openings 2 formed in the hydrogen electrode plate 1 except the square-shaped opening 2 at an upper end in Fig.1 communicate with the square-shaped openings 9, small-sized square-shaped openings 12 and with four of the rectangular openings 13. In Fig.1, only the square-shaped opening 2 located at the upper end is in communication with the two neighboring square-shaped openings 9 formed in the hydrogen gas flow path forming plate 6 and with two rectangular openings 13 communicating with each other and with the first cut-out 7.

Each of the triangular openings 3 formed in the hydrogen electrode plate 1 communicates with the square-shaped opening 9 and with the rectangular openings 13 formed in the hydrogen gas flow path forming plate 6, as shown in Fig.3.

The square-shaped openings 9 formed in the hydrogen gas flow path forming plate 6 communicate with the square-shaped openings 2 and four of the triangular openings 3 formed in the hydrogen electrode plate 1, while the small-size square-shaped openings 12 formed in the hydrogen gas flow path forming plate 6 communicate with one of the square-shaped openings 2 formed in the hydrogen electrode plate 1. The rectangular openings 13 formed in the hydrogen gas flow path forming plate 6, except the two rectangular openings 13 communicating with each other and with the first cut-out 7, communicate with both the square-shaped openings 2 and the triangular openings 3 formed in the hydrogen electrode plate 1. The two rectangular openings 13, formed in the hydrogen gas flow path forming plate 6 in communication with each other and with the first cut-out 7, communicate with one square-shaped opening 2 and with the two triangular openings 3 formed in the first cut-out 7.

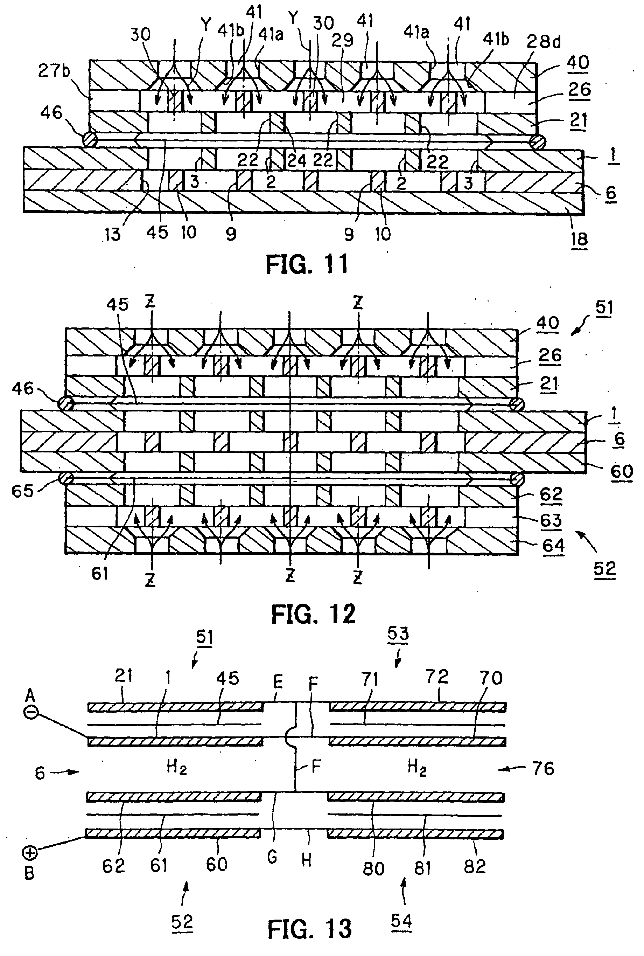

The unit fuel cell, forming the fuel cell of the present invention, is mounted on a back side part 18 of a back light, not shown, of a liquid crystal display, also not shown, of a personal computer and operates as a fuel cell as openings 9, 12, 13 of the hydrogen gas flow path forming plate 6 are closed by the back side portion 18 of the back light, as shown in and as explained subsequently with reference to Fig.11.

The result is that, by the back side portion 18 of the back light, hydrogen electrode plate 1 and the first cut-out 7 of the hydrogen gas flow path forming plate 6, a hydrogen gas supplying unit 17 is formed, whilst a hydrogen gas ejection unit 19 is formed by the back side portion 18 of the back light, hydrogen electrode plate 1 and the second cut-out 8 of the hydrogen gas flow path forming plate 6.

The hydrogen gas supplying unit 17 is connected to a hydrogen gas supply source, not shown, having a hydrogen occluding source, such as hydrogen occluding carbonaceous material or a hydrogen occluding alloy.

Since the openings 9, 12, 13 of the hydrogen gas flow path forming plate 6 are closed by the back side portion 18 of the back light, and the hydrogen electrode plate 1 and the hydrogen gas flow path forming plate 6 are tightly bonded together, as shown in Fig.3, the hydrogen gas, supplied from the hydrogen gas supplying unit 17 into the inside of the fuel cell, first flows through the rectangular openings 13 formed in the hydrogen gas flow path forming plate 6 into the square-shaped opening 2 and two triangular openings 3, formed in the hydrogen electrode plate 1, then flows from the square-shaped opening 2 formed in the hydrogen electrode plate 1 into two neighboring square-shaped openings 9 formed in the hydrogen gas flow path forming plate 6, and from the triangular openings 3 formed in the hydrogen electrode plate 1 into the square-shaped openings 9 formed in the hydrogen gas flow path forming plate 6, as indicated by arrow x in Fig.4.

The hydrogen gas supplied into the square-shaped opening 9 formed in the hydrogen gas flow path forming plate 6 further flows into the two neighboring square-shaped openings 2 formed in the hydrogen electrode plate 1. The hydrogen gas supplied to the neighboring square-shaped openings 2 formed in the hydrogen electrode plate 1 flows into two neighboring square-shaped openings 9 formed in the hydrogen gas flow path forming plate 6 and into the small-sized square-shaped openings 12 formed in the hydrogen gas flow path forming plate 6 or into the two neighboring square-shaped openings 9 formed in the hydrogen gas flow path forming plate 6.

So, the hydrogen gas, supplied from the hydrogen gas supplying unit 17 into the inside of the fuel cell, flows through a space between the hydrogen electrode plate 1 and the back side portion 18 of the back light, as it is spread two-dimensionally, until it is ejected through the hydrogen gas ejection unit 19 to outside the fuel cell. Thus, the hydrogen gas can be brought efficiently into contact with the hydrogen electrode plate 1.

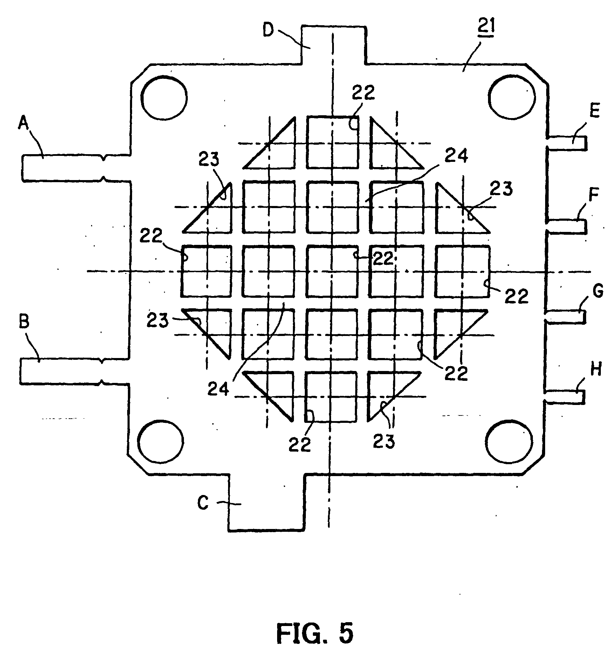

An oxygen electrode plate 21 of the unit fuel cell, forming the fuel cell of the present invention, is formed in the same way as the hydrogen electrode plate 1, as shown in Fig.5, and is formed by a substantially square-shaped plate member of stainless steel. It is noted that the plate member forming the oxygen electrode plate 21 is set to a thickness of 0.01 mm to 1.0 mm.

In the oxygen electrode plate 21, there are formed 13 square-shaped openings 22 and eight triangular openings 23 in a regular array by a lattice 24, as shown in Fig.5. The triangular openings 23 are formed in the peripheral area, whereas, of the 13 square-shaped openings 22, arranged in a mid portion of the oxygen electrode plate 21, the central opening 22 has its center in meeting with the center of the oxygen electrode plate 21.

In Fig.5, A to H are electrode interconnecting pins and are each in a rectangular shape.

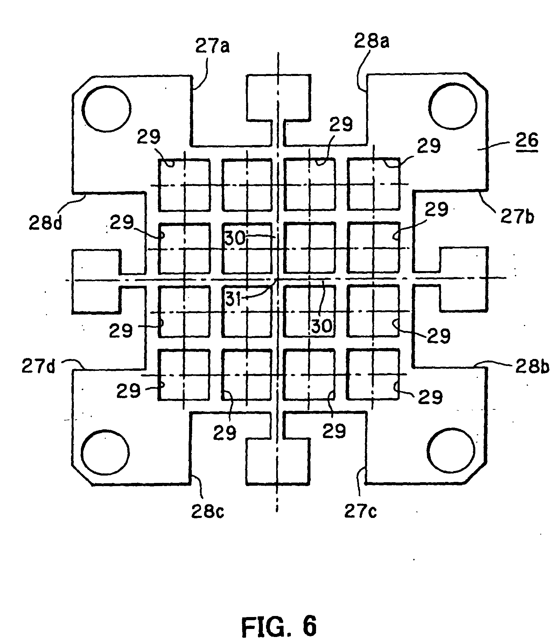

An air flow path forming plate 26 of the unit fuel cell, forming the fuel cell according to the present invention, is formed by a substantially square-shaped plate member of polycarbonate, and has cut-outs 27a, 28a, 27b, 28b, 27c, 28c, 27d, 28d, at two positions in each side of the plate member, as shown in Fig.6. The objective of forming the cut-outs 27a, 28a, 27b, 28b, 27c, 28c, 27d, 28d at two positions in each side of the air flow path forming plate 26 is to facilitate air intake from the peripheral portions of the air flow path forming plate 26. The plate member forming the air flow path forming plate 26 is set to a thickness of 0.01 m to 0.5 mm.

The air flow path forming plate 26 is formed with 16 square-shaped openings 29, as shown in Fig.6. The square-shaped opening 22 formed in the oxygen electrode plate 21 and the square-shaped opening 29 formed in the air flow path forming plate 26 are of the same size, with the square-shaped opening 22 formed in the mid portion of the oxygen electrode plate 21 having its center in coincidence with the center of the oxygen electrode plate 21, whereas no opening is provided in the center of the air flow path forming plate 26, but the 16 square-shaped openings 29 are formed in the air flow path forming plate 26 so that a point of intersection 31 of the square-shaped openings of the lattice 30 forming the four square-shaped openings formed at the center of the plate member will be coincident with the center of the air flow path forming plate 26.

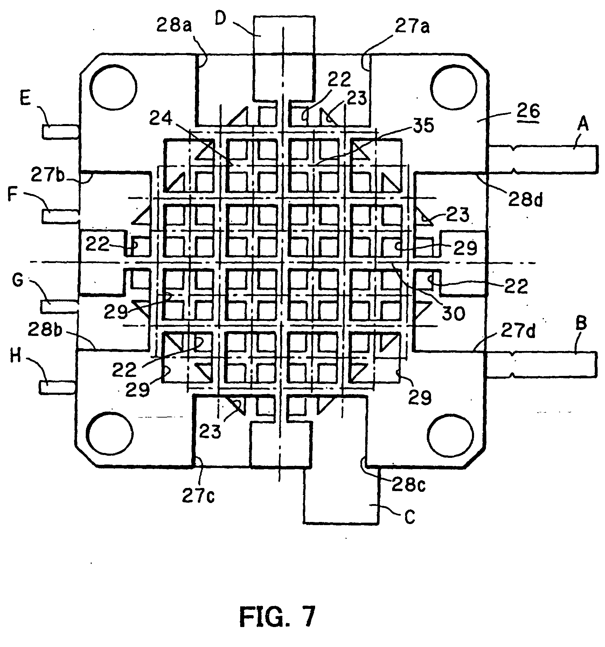

On the oxygen electrode plate 21 is superposed the air flow path forming plate 26, as shown in the bottom plan view of Fig.7, to form a layered assembly, as shown in Fig.7.

Referring to Fig.7, the air flow path forming plate 26 is superposed on and tightly bonded to the oxygen electrode plate 21, so that the points of intersection 35 of the lattice 24 forming the square-shaped openings 22 and the triangular openings 23 of the oxygen electrode plate 21 will be coincident with the center of the square-shaped openings 29 formed in the air flow path forming plate 26 and so that the points of intersection 36 of the lattice 30 forming the square-shaped openings 20 formed in the air flow path forming plate 26 will be coincident with the center of the square-shaped openings 22 formed in the oxygen electrode plate 21.

The result is that the square-shaped openings 22 formed in the oxygen electrode plate 21, except the square-shaped openings 22 at the upper and lower left and right ends, are in communication with the four neighboring square-shaped openings 29 formed in the air flow path forming plate 26, while the openings 29 positioned at the upper end are in communication with the two neighboring square-shaped openings 29 and the cut-outs 27a, 28a formed in the air flow path forming plate 26. The opening 29 positioned at the right end communicates with the two neighboring square-shaped openings 29 and the cut-outs 27d, 28d formed in the air flow path forming plate 26. 27. The opening 29 positioned at the lower end communicates with the two neighboring square-shaped openings 29 and with the cut-outs 27d, 28d formed in the air flow path forming plate 26, whilst the opening 29 positioned at the left end communicates with the two neighboring square-shaped openings 29 and the cut-outs 27d, 28d formed in the air flow path forming plate 26.

Moreover, the triangular openings 23 formed in the oxygen electrode plate 21 are in communication with the two neighboring square-shaped openings 29 and the cut-outs 27a, 28a, 27b, 28b, 27c, 28c, 27d, 28d formed in the air flow path forming plate 26.

Of the square-shaped openings 29, formed in the air flow path forming plate 26, the four openings 29 formed at the mid portions of the air flow path forming plate 26 communicate with four neighboring square-shaped openings 22 formed in the oxygen electrode plate 21. The four square-shaped openings 29 at the four corners in Fig.6 are in communication with the one square-shaped opening 22 formed in the oxygen electrode plate 21 and with two triangular openings 23, with the remaining square-shaped openings 29 formed in the air flow path forming plate 26 being in communication with the three neighboring square-shaped openings 22 and with the two triangular openings 23 formed in the oxygen electrode plate 21.

On the other hand, the cut-outs 27a, 28a, 27b, 28b, 27c, 28c, 27d, 28d, formed in the air flow path forming plate 26, are in communication with the one square-shaped opening 22 formed in the oxygen electrode plate 21 and with one triangular opening 23 formed in the oxygen electrode plate 21.

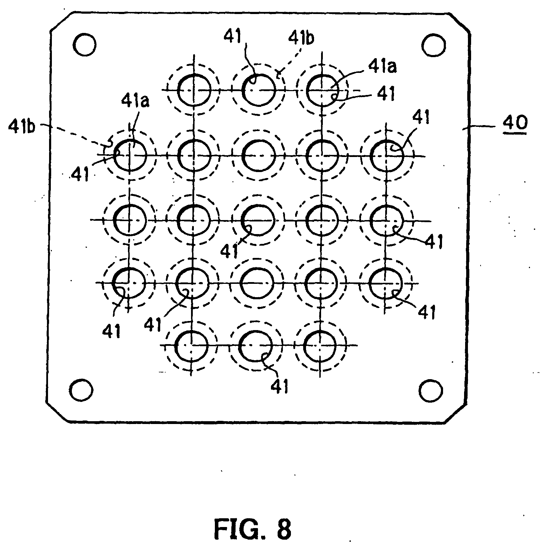

A module retention plate 40 of the unit fuel cell forming the fuel cell of the present invention is rectangular in profile, as shown in Fig.8, and is formed with 21 circular openings 41 in a regular array. Each circular opening 41 has a small-diameter portion 41a and a tapered portion 41b, having its inner wall section tapered so that its diameter is increased progressively. The module retention plate 40 is mounted on the air flow path forming plate 26 in tight contact therewith so that the tapered portion 41b will be positioned towards the air flow path forming plate 26.

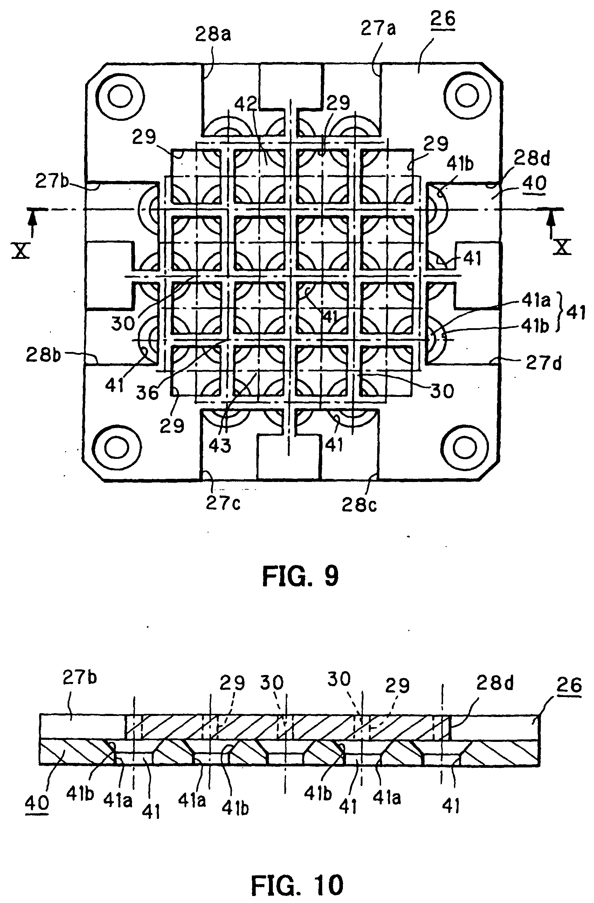

The module retention plate 40 is superposed on and tightly bonded to the air flow path forming plate 26 to form a layered assembly, as shown in the bottom plan view of Fig.9. Fig.10 shows a cross-sectional view taken along line X-X in Fig.9.

Referring to Figs.9 and 10, the module retention plate 40 is tightly bonded to the air flow path forming plate 26 so that the center of the circular openings 41 formed in the module retention plate 40 will be coincident with the points of intersection 36 of the lattice 30 forming the square-shaped openings 29 of the air flow path forming plate 26 and so that the points of intersection 43 of a lattice 42 forming the circular openings 41 of the module retention plate 40 will be coincident with the center of the square-shaped openings 29 formed in the air flow path forming plate 26.

The result is that, as shown in Fig.9, of the circular openings 41 formed in the module retention plate 40, the nine centrally located openings 41 communicate with the square-shaped openings 29 formed in the air flow path forming plate 26.

Referring now to Fig. 10, the circular opening 41 located at the upper mid portion communicates with the two neighboring square-shaped openings 29 and the cut-outs 27a, 28a, formed in the air flow path forming plate 26, whilst the circular opening 41 located at the right mid portion communicates with the two neighboring square-shaped openings 29 and the cut-outs 27d, 28d, formed in the air flow path forming plate 26, with the circular opening 41 located at the lower mid portion communicating with the two neighboring square-shaped openings 29 and the cut-outs 27c, 28c, formed in the air flow path forming plate 26, and with the circular opening 41 located at the lower left portion communicating with the two neighboring square-shaped openings 29 and the cut-outs 27b, 28b, formed in the air flow path forming plate 26

Referring to Fig.9, the remaining circular openings 41, formed in the module retention plate 40, communicate with the two neighboring square-shaped openings 29 and the cut-outs 27a, 28a, 27b, 28b, 27c, 28c, 27d or 28d formed in the air flow path forming plate 26.

Fig.11 shows a schematic cross-sectional view showing the state of communication between the openings 9, 12 and 13 formed in the hydrogen gas flow path forming plate 6 and the openings 2, 3 formed in the hydrogen electrode plate 1 of the fuel cell according to the present invention, and the state of communication between the openings 22, 23 formed in the oxygen electrode plate 21, the opening 29 formed in the air flow path forming plate 26 and the opening 41 formed in the module retention plate 40.

Referring to Fig.11, the unit fuel cell forming the fuel cell according to the present invention includes a hydrogen gas flow path forming plate 6, a hydrogen electrode plate 1, a proton conductor film 45 capable of permeating protons yielded on dissociation of hydrogen supplied to the hydrogen electrode plate 1, under the action of a catalyst contained in the hydrogen electrode plate 1, an oxygen electrode plate 21, an air flow path forming plate 26 and a module retention plate 40, layered in this order.

Specifically, the hydrogen gas flow path forming plate 6 is tightly contacted with and secured to the back side portion 18 of the back light of a liquid crystal display, not shown, of a personal computer, and the hydrogen electrode plate 1 is tightly bonded to the hydrogen gas flow path forming plate 6.

The proton conductor film 45 then is layered on and tightly bonded to the hydrogen electrode plate 1, whilst the oxygen electrode plate 21 is layered on and tightly bonded to the proton conductor film 45.

The air flow path forming plate 26 is also tightly contacted with and bonded to the oxygen electrode plate 21, after which set screws, not shown, are threaded into tapped holes, not shown, formed in the hydrogen gas flow path forming plate 6, hydrogen electrode plate 1, oxygen electrode plate 21, air flow path forming plate 26 and in the module retention plate 40 for securing these components to the back side portion 18 of the back light.

The peripheral portions of the proton conductor film 45 are sealed with sealing members 46, as shown in Fig.11.

With the fuel cell of the present invention constructed as described above, the hydrogen gas, supplied from the hydrogen gas supplying unit 17 into the inside of the fuel cell, flows through a space between the hydrogen electrode plate 1 and the back side portion 18 of the back light, as it is spread two-dimensionally, and as it repeatedly contacts the hydrogen electrode plate 1, as described above, until it is ejected through the hydrogen gas ejection unit 19 to outside the fuel cell.

The hydrogen supplied to the hydrogen electrode plate 1 is dissociated into protons and electrons, by the action of the catalyst contained in the hydrogen electrode plate 1, with the electrons being absorbed by the hydrogen electrode plate 1 and with the protons being sent through proton conductor film 45 to the oxygen electrode plate 21. The electrons absorbed by the hydrogen electrode plate 1 are sent through a load, not shown, to the oxygen electrode plate 21.

The air is sent into the inside of the fuel cell, through each of the circular openings 41 formed in the module retention plate 40, as indicated by arrow Y in Fig.11.

The air supplied to the nine openings 41, formed in a mid portion of the module retention plate 40, flows into four neighboring square-shaped openings 29 formed in the air flow path forming plate 26.

In Fig.10, the air supplied to the circular opening 41 formed at an upper mid portion flows into two neighboring square-shaped openings 29 and the cut-outs 27a, 28a formed in the air flow path forming plate 26, whilst the air supplied to the circular opening 41 formed at a mid left end portion flows into two neighboring square-shaped openings 29 and into the cut-outs 27b, 28b formed in the air flow path forming plate 26.

Also, in Fig.10, the air supplied to the circular opening 41 formed at a lower mid portion flows into two neighboring square-shaped openings 29 and the cut-outs 27c, 28c formed in the air flow path forming plate 26, whilst the air supplied to the circular opening 41 formed at a mid right end portion flows into two neighboring square-shaped openings 29 and the cut-outs 27d, 28d formed in the air flow path forming plate 26.

The air supplied to the remaining circular openings 41 formed in the module retention plate 40 flows into two neighboring square-shaped openings 22 and the cut-outs 27a, 28a, 27b, 28b, 27c, 28c, 27d, 28d formed in the air flow path forming plate.

That is, of the air flowing into the square-shaped openings 29 formed in the air flow path forming plate 26, the air flowing into the four openings 29 in the mid portion flows into four neighboring openings 22 formed in the oxygen electrode plate 21, whilst the air flowing into the four square-shaped opening 29 at the four corners in Fig.6 flows into one square-shaped opening 22 and into two triangular openings 23 formed in the oxygen electrode plate 21.

On the other hand, the air flowing into the remaining square-shaped openings 29 formed in the air flow path forming plate 26 flows into neighboring three square-shaped openings 22 and into two triangular openings 23 formed in the oxygen electrode plate 21.

The air flowing into the cut-outs 27a, 28a, 27b, 28b, 27c, 28c, 27d, 28d formed in the air flow path forming plate 26 flows into one square-shaped opening 22 and one triangular opening 23 formed in the oxygen electrode plate 21.

The air also flows from the cut-outs 27a, 28a, 27b, 28b, 27c, 28c, 27d, 28d formed in two positions in each side of the air flow path forming plate 26 into the square-shaped openings 22 and into the triangular openings 23 formed in the oxygen electrode plate 21.

In this manner, air is supplied through the openings 41 formed in the module retention plate 40 into the opening 29 and the cut-outs 27a, 28a, 27b, 28b, 27c, 28c, 27d, 28d, formed in the air flow path forming plate 26, while being supplied from the cut-outs 27a, 28a, 27b, 28b, 27c, 28c, 27d, 28d formed in two positions in each side of the air flow path forming plate 26 and into the square-shaped openings 22 and into the triangular openings 23 formed in the oxygen electrode plate 21.

The result is that oxygen contained in the air is absorbed in the hydrogen electrode plate 1 and is combined with electrons routed to the oxygen electrode plate 21 through a load, not shown, and with protons routed to the oxygen electrode plate 21 through the proton conductor film 45 to yield water.

So, the electromotive force is produced across the hydrogen electrode plate 1 and the oxygen electrode plate 21 to cause current to flow in the load.

In the present embodiment, the hydrogen gas flow path forming plate 6 is superposed on the hydrogen electrode plate 1 so that the points of intersection 15 of the lattice 4 forming the square-shaped openings 2 and the square-shaped openings 3 of the hydrogen electrode plate 1 will be in coincidence with the center of the square-shaped openings 9 formed in the hydrogen gas flow path forming plate 6 and so that the points of intersection 16 of the lattice 10 forming the small-sized square-shaped openings 12 and the rectangular openings 13 of the hydrogen gas flow path forming plate 6 will be in coincidence with the center of the square-shaped openings 2 formed in the hydrogen electrode plate 1, as shown in Fig.3. The result is that the respective square-shaped openings 9 formed in the hydrogen gas flow path forming plate 6 communicate with the square-shaped openings 2 and four of the triangular openings 3 formed in the hydrogen electrode plate 1, whilst the respective small-sized square-shaped openings 12 formed in the hydrogen gas flow path forming plate 6 communicate with one of the square-shaped openings 2 formed in the hydrogen electrode plate 1, with the rectangular openings 13 formed in the hydrogen gas flow path forming plate 6 communicating with one another, as shown in Fig.3. Additionally, the rectangular openings 13, except the two rectangular openings 13 communicating with the first cut-out 7, communicate with both the square-shaped openings 2,3 formed in the hydrogen electrode plate 1. The two rectangular openings 13, formed in the hydrogen gas flow path forming plate 6 in communication with each other and with the first cut-out 7, are in communication with one square-shaped opening 2 and with two triangular openings 3 formed in the hydrogen electrode plate 1.

In the above-described arrangement, the hydrogen gas supplied from the hydrogen gas supplying unit 17 to each of the square-shaped openings 9 formed in the hydrogen gas flow path forming plate 6 flows into the square-shaped openings 2 and four of the triangular openings 3 formed in the hydrogen electrode plate 1, whilst the hydrogen gas supplied to the small-sized square-shaped openings 12 formed in the hydrogen gas flow path forming plate 6 flows into one of the square-shaped openings 2 formed in the hydrogen electrode plate 1. The hydrogen gas supplied to the rectangular openings 13 formed in the hydrogen gas flow path forming plate 6 flows into the square-shaped openings 2 and the triangular openings 3, formed in the hydrogen electrode plate 1, without flowing into the two rectangular openings 13 communicating with each other and with the first cut-out 7. Moreover, the hydrogen gas, supplied to the two rectangular openings 13 communicating with the first cut-out 7, flows into the sole square-shaped opening 2 and two rectangular openings 3 formed in the hydrogen electrode plate 1.

According to the present invention, in which the hydrogen electrode plate and the hydrogen gas flow path forming plate 6 are superposed together, as described above, each of the square-shaped openings 2 formed in the hydrogen electrode plate 1, excluding the square-shaped opening 2 located at the upper end in Fig.1, communicates with the square-shaped openings 9, small-sized square-shaped openings 12 and four of the rectangular openings 13, formed in the hydrogen gas flow path forming plate 6, such that only the square-shaped opening 2 located at the upper end in Fig.1 communicates with each other and with the two neighboring square-shaped openings 9 formed in the hydrogen gas flow path forming plate 6, while communicating with two rectangular openings 13 communicating in turn with the first cut-out 7. Additionally, each of the triangular openings 3 formed in the hydrogen electrode plate 1 communicates with the square-shaped openings 9 and the rectangular openings 13 formed in the hydrogen gas flow path forming plate 6, as shown in Fig.3.

The result is that the hydrogen gas, flowing into each of the square-shaped openings 2 formed in the hydrogen electrode plate 1, except the square-shaped opening 2 located at the upper end in Fig.1, flows into the square-shaped openings 9, small-sized square-shaped opening 12 and four of the rectangular openings 13, formed in the hydrogen gas flow path forming plate 6, while the hydrogen gas, flowing into the square-shaped opening 2 located at the upper end in Fig.1, flows into two square-shaped openings 9, formed in the hydrogen gas flow path forming plate 6 in communication with each other and into two rectangular openings 13 communicating with each other and with the first cut-out 7. Additionally, the hydrogen gas, flowing into each of the triangular openings 3 formed in the hydrogen electrode plate 1, flows into the square-shaped openings 9 and into the rectangular openings 13.

Since the hydrogen gas, supplied from the hydrogen gas supplying unit 17 into the inside of the fuel cell, flows through a space between the hydrogen electrode plate 1 and the back side portion 18 of the back light, as it is spread two-dimensionally, and as it repeatedly contacts the hydrogen electrode plate 1, as described above, so as to be ejected through the hydrogen gas ejection unit 19 to outside the fuel cell, the hydrogen gas may be allowed to contact the hydrogen electrode plate 1 efficiently, thus improving the power generation efficiency of the fuel cell.

Moreover, it is sufficient if the hydrogen electrode plate 1, including 13 square-shaped opening 2 and eight square-shaped opening 3 regularly arrayed by the lattice 4, and the hydrogen gas flow path forming plate 6, including the first cut-out 7, forming the hydrogen gas supplying unit, the second cut-out 8, forming the hydrogen gas ejection unit, 12 square-shaped openings 9 of the same size as the square-shaped opening 2 formed in the hydrogen electrode plate 1, four small-sized square-shaped opening 12 and eight rectangular openings 13, are superposed together so that the points of intersection 15 of the lattice 4 forming the square-shaped opening 2 and the square-shaped opening 3 of the hydrogen electrode plate 1 will be coincident with the center of the square-shaped openings 9 formed in the hydrogen gas flow path forming plate 6, and so that the points of intersection 16 of the lattice 10 forming the square-shaped openings 9, small-sized square-shaped openings 12 and the rectangular openings 13 of the hydrogen gas flow path forming plate 6 will be coincident with the center of the square-shaped openings 2 formed in the hydrogen electrode plate 1, as shown in Fig.3. Then, such a fuel cell may be produced in which the machining operation is that easy, the structure is simplified and the hydrogen gas may be supplied into efficient contact with the hydrogen electrode plate 1 to improve the power generation efficiency.

The module retention plate 40 is tightly bonded to the air flow path forming plate 26 so that the center of each of the circular openings 41 formed in the module retention plate 40 will be coincident with the points of intersection 36 of the lattice 30 forming the square-shaped openings 29 of the air flow path forming plate 26, as shown in Fig.10. The result is that nine circular openings 41 located at a mid portion of the circular openings 41 formed in the module retention plate 40 communicate with the four neighboring square-shaped openings 29 formed in the air flow path forming plate 26, the circular openings 41 located at the upper mid portion in Figs.8 and 10 communicate with the two neighboring square-shaped openings 29 and cut-outs 27a, 28a formed in the air flow path forming plate 26, as shown in Fig.10, the circular openings 41 located at the right mid portion communicate with the two neighboring square-shaped openings 29 and cut-outs 27b, 28b formed in the air flow path forming plate 26, the circular openings 41 located at the lower mid portion communicates with the two neighboring square-shaped openings 29 and cut-outs 27c, 28c formed in the air flow path forming plate 26 and the circular openings 41 located at the left mid portion communicate with the two neighboring square-shaped openings 29 and cut-outs 27d, 28d formed in the air flow path forming plate 26. The remaining circular openings 41formed in the module retention plate 40 communicate with two neighboring square-shaped openings 29 and cut-outs 27a, 28a, 27b, 28b, 27c, 28c, 27d, 28d formed in the air flow path forming plate 26, as shown in Fig.10.

In this manner, the air supplied to the nine mid openings 41 formed in the module retention plate 40 flows into the four neighboring square-shaped openings 29 formed in the air flow path forming plate 26, while the air supplied to the circular openings 41 located at the upper mid portion in Figs.8 and 10 flows into two neighboring square-shaped openings 29 and cut-outs 27a, 28a formed in the air flow path forming plate 26. The air supplied to the circular openings 41 located at the right mid portion flows into two neighboring square-shaped openings 29 and cut-outs 27b, 28b formed in the air flow path forming plate 26. On the other hand, the air supplied to the circular openings 41 located at the lower mid portion in Figs.8 and 10 flows into two neighboring square-shaped openings 29 and cut-outs 27c, 28c formed in the air flow path forming plate 26 and the air supplied to the circular openings 41 located at the left mid portion flows into two neighboring square-shaped openings 29 and cut-outs 27d, 28d formed in the air flow path forming plate 26. The air supplied to the remaining circular openings 41 formed in the module retention plate 40 flows into the two neighboring square-shaped openings 29 and cut-outs 27a, 28a, 27b, 28b, 27c, 28c, 27d, 28d formed in the air flow path forming plate 26.

With the above-described fuel cell according to the present invention, the oxygen electrode plate 21 and the air flow path forming plate 26 are superposed together so that the points of intersection 35 of the lattice 24 forming the square-shaped openings 22 and the triangular openings 23 of the oxygen electrode plate 21 will be coincident with the center of the square-shaped openings 29 formed in the air flow path forming plate 26 and so that the points of intersection 36 of the lattice 30 forming the square-shaped openings 29 formed in the air flow path forming plate 26 will be coincident with the center of the square-shaped opening 22 formed in the oxygen electrode plate 21. As a result, the square-shaped openings 22 formed in the oxygen electrode plate 21, except the openings 29 located at upper, lower, left and right ends in Fig.5, communicate with the four neighboring square-shaped openings 29 formed in the air flow path forming plate 26, the opening 29 located at an upper end communicates with the two neighboring square-shaped opening 29 and the cut-outs 27a, 28a, formed in the air flow path forming plate 26, the opening 29 located at a right end communicates with the two neighboring square-shaped opening 29 and the cut-outs 27b, 28b, formed in the air flow path forming plate 26, and the opening 29 located at a lower end communicates with the two neighboring square-shaped opening 29 and the cut-outs 27c, 28d, formed in the air flow path forming plate 26. The opening 29 located at the left end communicates with the two neighboring square-shaped opening 29 and the cut-outs 27d, 28d, formed in the air flow path forming plate 26. The triangular openings 23 formed in the oxygen electrode plate 21 communicate with the two neighboring square-shaped opening 29 and with the cut-outs 27a, 28a, 27b, 28b, 27c, 28c, 27d, 28d. The mid four square-shaped openings 29 of the square-shaped openings 29 formed in the air flow path forming plate 26 communicate with the four neighboring square-shaped openings 22 formed in the oxygen electrode plate 21. The four square-shaped openings 29 lying at the four corners communicate with the sole square-shaped opening 22 and the triangular opening 23 formed in the oxygen electrode plate 21, while the remaining square-shaped openings 29 formed in the air flow path forming plate 26 communicate with the three neighboring square-shaped openings 22 and two of the triangular openings 23 formed in the oxygen electrode plate 21. On the other hand, the cut-outs 27a, 28a, 27b, 28b, 27c, 28c, 27d, 28d formed in the air flow path forming plate 26 communicate with the sole square-shaped opening 22 and the sole triangular opening 23 formed in the oxygen electrode plate 21.

The result is that the air supplied to nine openings 41 located at a mid portion of the module retention plate 40 flows into the four neighboring square-shaped openings 29 formed in the air flow path forming plate 26, while the air supplied to the circular openings 41 at the upper mid portion in Figs.8 and 10 flows into two neighboring square-shaped openings 29 and the cut-outs 27a, 28a, formed in the air flow path forming plate 26, whilst the air supplied to the circular openings 41 at the right mid portion flows into two neighboring square-shaped openings 29 and the cut-outs 27b, 28b formed in the air flow path forming plate 26. The air supplied to the circular openings 41 at the lower mid portion in Figs.8 and 10 flows into two neighboring square-shaped openings 29 and the cut-outs 27c, 28c, formed in the air flowpath forming plate 26, while the air supplied to the circular openings 41 at the left mid portion in Figs.8 and 10 flows into two neighboring square-shaped openings 29 and the cut-outs 27d, 28d, formed in the air flow path forming plate 26. The air supplied into the remaining circular openings 41 formed in the air flow path forming plate 26 flows into the two neighboring square-shaped openings 29 and the cut-outs 27a, 28a, 27b, 28b, 27c, 28c, 27d, 28d, formed in the air flow path forming plate 26. The air flowing into the four mid openings 29 of the air flowing into the square-shaped openings 29 in the air flow path forming plate 26 flows into four neighboring square-shaped openings 22 formed in the oxygen electrode plate 21, while the air flowing into the four square-shaped openings 22 formed at the four corners in Fig.6 flows into the sole square-shaped opening 22 and into the two triangular openings 23 formed in the oxygen electrode plate 21. On the other hand, the air flowing into the remaining square-shaped openings 29 formed in the air flow path forming plate 26 flows into the three neighboring square-shaped opening 22 and two triangular openings 23 formed in the oxygen electrode plate 21. Additionally, the air flowing into the cut-outs 27a, 28a, 27b, 28b, 27c, 28c, 27d, 28d formed in the air flow path forming plate 26 flows into the sole square-shaped opening 22 and into the sole triangular opening 23 formed in the oxygen electrode plate 21.

In this manner, the air is supplied through the opening 21 formed in the module retention plate 40 into the opening 29 and the cut-outs 27a, 28a, 27b, 28b, 27c, 28c, 27d, 28d formed in the air flow path forming plate 26 and further into the square-shaped opening 22 and two triangular openings 23 formed in the oxygen electrode plate 21, so that oxygen may be brought efficiently into contact with the oxygen electrode plate 21 to improve the power generation efficiency of the fuel cell significantly.

Moreover, since it is sufficient if the oxygen electrode plate 21, having 12 square-shaped openings 22 and eight square-shaped openings 23 arrayed in a regular pattern by the lattice 24, air flow path forming plate 26, carrying 16 square-shaped openings 29 of the same size as the opening 22 formed in the oxygen electrode plate 21 and the cut-outs 27a, 28a, 27b, 28b, 27c, 28c, 27d, 28d, and the module retention plate 40 having a regular array of 21 circular openings 41, are layered in this order, such a fuel cell may be produced in which the machining operation is that easy, the structure is simplified and the hydrogen gas may be supplied into efficient contact with the hydrogen electrode plate 1 to improve the power generation efficiency.

In the above-described embodiment, the hydrogen electrode plate 1 and the hydrogen gas flow path forming plate 6 are superposed and bonded tightly together so that the points of intersection 15 of the lattice 4 forming the square-shaped openings 2 and the triangular openings 3 of the hydrogen electrode plate 11 will be coincident with the center of the square-shaped openings 9 formed in the air flow path forming plate 6 and so that the points of intersection 16 of the lattice 10 forming the square-shaped openings 9, the small-sized square-shaped openings 12 and the rectangular openings 13 formed in the hydrogen gas flow path forming plate 6 will be coincident with the center of the square-shaped openings 2 formed in the hydrogen electrode plate 1.

Moreover, the air flow path forming plate 26 is superposed and bonded tightly to the oxygen electrode plate 21 so that the points of intersection 35 of the lattice 24 forming the square-shaped openings 22 and the triangular openings 23 of the oxygen electrode plate 21 will be coincident with the center of the square-shaped openings 29 formed in the air flow path forming plate 26 and so that the points of intersection 36 of the lattice 30 forming the square-shaped openings 29 formed in the air flow path forming plate 26 will be coincident with the center of the square-shaped openings 22 formed in the oxygen electrode plate 21. Additionally, the module retention plate 40 is tightly bonded to the air flow path forming plate 26 so that the center of the circular openings 41 formed in the module retention plate 40 will be coincident with the points of intersection 36 of the lattice 30 forming the square-shaped openings 29 of the air flow path forming plate 26, and so that the points of intersection 43 of the lattice 42 forming the circular openings 41 of the module retention plate 40 will be coincident with the center of the square-shaped openings 29 formed in the air flow path forming plate 26, as shown in Fig.10.

With the above-described structure, the force applied to the module retention plate 40 is transmitted in a distributed fashion to the air flow path forming plate 26 and thence to the oxygen electrode plate 21, again in a distributed fashion. The force transmitted to the oxygen electrode plate 21 is transmitted through a seal 46 to the hydrogen electrode plate 1, but is transmitted to the hydrogen gas flow path forming plate 6, again in a distributed fashion. So, the force applied to the module retention plate 40 is positively distributed and applied homogeneously to the entire fuel cell 1, so that the proton conductor film 45 may contact the hydrogen electrode plate 1 and the oxygen electrode plate 21 homogeneously to improve the power generation efficiency.

Fig.12 shows a modification of the fuel cell according to the present invention. Fig. 12 is a cross-sectional view showing a modification of the invention and shows the state of communication between the openings formed in the respective members making up the fuel cell.

Referring to Fig.12, the fuel cell of the present embodiment is comprised of a first unit fuel cell 51 and a second unit fuel cell 52, layered together. The first unit fuel cell 51 includes, as in the above-described fuel cell, a hydrogen gas flow path forming plate 6, a hydrogen electrode plate 1, a proton conductor film 45, an oxygen electrode plate 21, an air flow path forming plate 26 and a module retention plate 40, layered in this order from below, whilst the second unit fuel cell 52 includes a hydrogen gas flow path forming plate 6, a hydrogen electrode plate 60, a proton conductor film 61, an oxygen electrode plate 62, an air flow path forming plate 63 and a module retention plate 64, layered in this order from above. The first and second unit fuel cells 51, 52 own a common hydrogen gas flow path forming plate 6. In Fig.12, 65 denotes a sealing member.

In the present fuel cell, the hydrogen electrode plate 60, proton conductor film 61, oxygen electrode plate 62, air flow path forming plate 63 and the module retention plate 64 are formed in the same way as the hydrogen electrode plate 1, proton conductor film 45, oxygen electrode plate 21, air flow path forming plate 26 and the module retention plate 40. The hydrogen electrode plate 60, proton conductor film 61, oxygen electrode plate 62, air flow path forming plate 63 and the module retention plate 64 are layered together so that the relative disposition of the hydrogen electrode plate 51 and the hydrogen gas flow path forming plate 6, the relative disposition of the oxygen electrode plate 53 and the air flow path forming plate 54 and the relative disposition of the air flow path forming plate 54 and the module retention plate 55 will be the same as the relative disposition of the hydrogen electrode plate 1 and the hydrogen gas flow path forming plate 6, the relative disposition of the oxygen electrode plate 21 and the air flow path forming plate 26 and the relative disposition of the air flow path forming plate 26 and the module retention plate 40, respectively.

In the present embodiment of the fuel cell, the first and second unit fuel cells 51, 52 can be coupled to each other in an optional fashion to form a fuel cell by selectively severing or leaving intact the pins A to H for electrode interconnection formed in the oxygen electrode plates 21, 62 and in the hydrogen electrode plates 1, 60.

If the pins A to H for electrode interconnection formed in the oxygen electrode plates 21, 62 and in the hydrogen electrode plates 1, 60 are to be selectively severed or left intact, as shown in the following Table 1:

**Table 1**

| electrodes | A | B | C | D | E | F | G | H |
|---|---|---|---|---|---|---|---|---|
| 26 | | | | | 0 | | | |
| 1 | 0 | | 0 | 0 | | | | |
| 60 | | | 0 | 0 | 0 | | | |
| 62 | | 0 | | | | | | |

th first and second unit fuel cells are connected in series with each other.

In Table 1, [0] denotes that the relevant pin for electrode interconnection is left intact without cutting.

That is, in the oxygen electrode plate 21 forming the first unit fuel cell 51, the pin for electrode interconnection E only is left, with the pins for electrode interconnection A, B, C, D, F, G and H being severed, whereas, in the oxygen electrode plate 60 forming the second unit fuel cell 52, the pins C, D and E for electrode interconnection are left, with the pins for electrode interconnection A, B, F, G and H being severed. The pin for electrode interconnection E formed in the oxygen electrode plate 21 forming the first unit fuel cell 51 is bent downwards, whereas the pin for electrode interconnection E formed in the hydrogen electrode plate 60 forming the second unit fuel cell 52 is bent upwards and coupled to the pin for electrode interconnection E formed in the oxygen electrode plate.

As a result, the first and second unit fuel cells 51, 52 are connected in series with each other.

On the other hand, in the hydrogen electrode plate 1 forming the first unit fuel cell 51, the pins for electrode interconnection A, C and D are left, with the pins for electrode interconnection B, E, F, G and H being severed, whereas, in the oxygen electrode plate 62 forming the second unit fuel cell 52, only the pin for electrode interconnection B is left, with the pins for electrode interconnection A, C, D, E, F, G and H being severed. The pin for electrode interconnection A, formed in the hydrogen electrode plate 1 forming the first unit fuel cell 51, and the pin for electrode interconnection B, formed in the oxygen electrode plate 62, forming the second unit fuel cell 52, are separately coupled to outputs.

If the pins for electrode interconnection A to H formed in the oxygen electrode plate 21 or 62 and in the hydrogen electrode plate 1 or 60 are selectively severed or left intact, as shown in Table 2:

**Table 2**

| electrodes | A | B | C | D | E | F | G | H |
|---|---|---|---|---|---|---|---|---|
| 26 | | | | | | 0 | | |
| 1 | 0 | | 0 | 0 | 0 | | | |
| 60 | | | 0 | 0 | 0 | | | |
| 62 | | 0 | | | | 0 | | |

the first and second unit fuel cells 51, 52 are connected in parallel with each other.

That is, in the oxygen electrode plate 21 forming the first unit fuel cell 51, the pin for electrode interconnection F measly is left, with the pins for electrode interconnection A, B, C, D, E, G and H being severed, whereas, in the oxygen electrode plate 60 forming the second unit fuel cell 52, the pins B and F for electrode interconnection are left, with the pins for electrode interconnection A, C, D, F, G and H being severed. The pin for electrode interconnection F formed in the oxygen electrode plate 21 forming the first unit fuel cell 51 is bent downwards, whereas the pin for electrode interconnection F formed in the oxygen electrode plate 62 forming the second unit fuel cell 52 is bent upwards and coupled to the pin for electrode interconnection F formed in the oxygen electrode plate.

Also, in the hydrogen electrode plate 1 forming the first unit fuel cell 51, the pins for electrode interconnection A, C, D and E are left, with the pins for electrode interconnection B, F, G and H being severed, whereas, in the hydrogen electrode plate 60 forming the second unit fuel cell 52, the pins C, D and E for electrode interconnection are left, with the pins for electrode interconnection A, B, F, G and H being severed. The pin for electrode interconnection F formed in the hydrogen electrode plate 1 forming the first unit fuel cell 51 is bent downwards, whereas the pin for electrode interconnection E formed in the hydrogen electrode plate 60 forming the second unit fuel cell 52 is bent upwards and coupled to the pin for electrode interconnection F formed in the oxygen electrode plate.

The result is that the first and second unit fuel cells 51, 52 are connected in parallel with each other.

The pin for electrode interconnection A formed in the hydrogen electrode plate 1 forming the first unit fuel cell 51 and the pin for electrode interconnection B formed in the oxygen electrode plate 62 forming the second unit fuel cell 52 are separately coupled to outputs.

With the fuel cell, described above, the hydrogen gas path is fixed by the hydrogen electrode plate 1, hydrogen gas flow path forming plate 6 and by the hydrogen electrode plate 60, so that the hydrogen gas is supplied from the hydrogen gas supplying unit 17 into a hydrogen gas path defined by the hydrogen electrode plate 1, hydrogen gas flow path forming plate 6 and by the hydrogen electrode plate 60. Thus, the hydrogen gas flows through the hydrogen gas path, as it is spread two-dimensionally as indicated by arrow Z in Fig.12, and as it repeatedly contacts the hydrogen electrode plate 1, as described above, until it is ejected through the hydrogen gas ejection unit 19 to outside the fuel cell.

On the other hand, the air supplied through the module retention plate 64 is supplied to the oxygen electrode plate 62, as it is spread two-dimensionally, through the air flow path forming plate 63, as is the air supplied through the module retention plate 40.

With the above-described structure, the fuel cell may be constructed by interconnecting the first unit fuel cell 51 and the second unit fuel cell 52 in an optional mode of interconnection by selectively severing or leaving the pins for electrode interconnection A to H formed in the oxygen electrode plate 21 or 62 and in the hydrogen electrode plate 1 or 60.

Moreover, in the fuel cell of the present invention, the hydrogen electrode plate 1 and the hydrogen gas flow path forming plate 6 are superposed and tightly bonded together so that the points of intersection 15 of the lattice 4 forming the square-shaped openings 2 and the triangular openings 3 of the hydrogen electrode plate 11 will be coincident with the center of the square-shaped openings 9 formed in the air flow path forming plate 6 and so that the points of intersections 16 of the lattice 10 forming the square-shaped openings 9, the small-sized square-shaped openings 12 and the rectangular openings 13 formed in the hydrogen gas flow path forming plate 6 will be coincident with the center of the square-shaped openings 2 formed in the hydrogen electrode plate 1, as shown in Fig.3.

In the fuel cell according to the present invention, the air flow path forming plate 26 is superposed on and tightly bonded to the oxygen electrode plate 21 so that, as shown in Fig.7, the points of intersection 35 of the lattice 24 forming the square-shaped openings 22 and the triangular openings 23 of the oxygen electrode plate 21 will be coincident with the center of the square-shaped openings 29 formed in the air flow path forming plate 26 and so that the points of intersection 36 of the lattice 30 forming the square-shaped openings 29 formed in the air flow path forming plate 26 will be coincident with the center of the square-shaped openings 22 formed in the oxygen electrode plate 21. Additionally, the module retention plate 40 is tightly bonded to the air flow path forming plate 26 so that the center of each of the circular openings 41 formed in the module retention plate 40 will be coincident with the points of intersection 36 of the lattice 30 forming the square-shaped openings 29 of the air flow path forming plate 26, and so that the points of intersection 43 of the lattice 42 forming the circular openings 41 of the module retention plate 40 will be coincident with the center of the square-shaped openings 29 formed in the air flow path forming plate 26, as shown in Fig. 10.

Moreover, the hydrogen electrode plate 60 forming the second unit fuel cell 52 and the hydrogen gas flow path forming plate 6 are superposed and tightly bonded to each other with the equivalent relative positions to those of the hydrogen electrode plate 1 and the hydrogen gas flow path forming plate 6 forming the first unit fuel cell 51, while the oxygen electrode plate 62 and the air flow path forming plate 63 forming the second unit fuel cell 52 are superposed and tightly bonded to each other with the equivalent relative positions to those of the oxygen electrode plate 21 and the air flow path forming plate 26 forming the first unit fuel cell 51.

With the above-described structure, the force applied to the module retention plate 40 of the first unit fuel cell 51 is transmitted in a distributed fashion to the air flow path forming plate 26 and thence to the oxygen electrode plate 21, again in a distributed fashion. The force transmitted to the oxygen electrode plate 21 is transmitted through a seal 46 to the hydrogen electrode plate 1, but is transmitted to the hydrogen gas flow path forming plate 6, again in a distributed fashion. On the other hand, the force applied to the module retention plate 64 of the second unit fuel cell 52 is transmitted in a distributed fashion to the air flow path forming plate 63 and thence to the oxygen electrode plate 62, again in a distributed fashion. The force transmitted to the oxygen electrode plate 62 is transmitted through a seal 65 to the hydrogen electrode plate 60, but is transmitted to the hydrogen gas flow path forming plate 6, again in a distributed fashion. So, the force applied to the module retention plates 40,64 is positively distributed and applied homogeneously to the entire fuel cell 1, so that the proton conductor film 45 may contact the hydrogen electrode plate 1 and the oxygen electrode plate 21 homogeneously to improve the power generation efficiency.

A further embodiment of the present invention is explained by referring to the drawings.

Referring to Fig. 13, the fuel cell of the present embodiment is comprised of a first unit fuel cell 51, a second unit fuel cell 52, a third unit fuel cell 53 and a fourth unit fuel cell 54. The first unit fuel cell 51 includes the hydrogen gas flow path forming plate 6, hydrogen electrode plate 1, proton conductor film 45, oxygen electrode plate 21, air flow path forming plate, not shown, and a module retention plate, not shown, layered in this order from below, whilst the second unit fuel cell 52 includes a hydrogen gas flow path forming plate 6, a hydrogen electrode plate 60, a proton conductor film 61, an oxygen electrode plate 62, an air flow path forming plate, not shown, and a module retention plate, also not shown, layered in this order from above. The third unit fuel cell 53 includes a hydrogen gas flow path forming plate 76, a hydrogen electrode plate 70, a proton conductor film 71, an oxygen electrode plate 72, an air flow path forming plate, not shown, and a module retention plate, also not shown, layered in this order from below, as in the first unit fuel cell 51, whilst the fourth unit fuel cell 54 includes a hydrogen gas flow path forming plate 76, a hydrogen electrode plate 80, a proton conductor film 81, an oxygen electrode plate 82, an air flow path forming plate, not shown, and a module retention plate, also not shown, layered in this order from above, as in the second unit fuel cell 52.

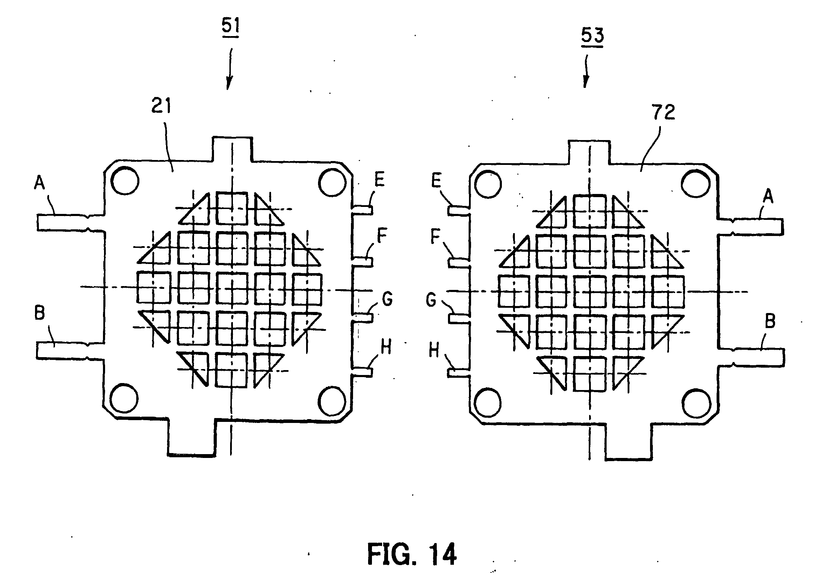

The oxygen electrode plate 72 of the third unit fuel cell 53 is mounted with respect to the oxygen electrode plate 21 of the first unit fuel cell 51, with the front and back sides reversed, line-symmetrically with respect to a straight line passing through neighboring portion, so that pins for electrode interconnection E, F, G and H thereof will face pins for electrode interconnection E, F, G and H of the oxygen electrode plate 21 of the first unit fuel cell 51, as shown in Fig.14.

Although not shown, the relationship between the hydrogen electrode plate 70 forming the third unit fuel cell 53 and the hydrogen electrode plate 1 forming the first unit fuel cell 51 is similar to that described above, as is the relationship between the hydrogen electrode plate 80 and the oxygen electrode plate 82 forming the fourth unit fuel cell 54 and the hydrogen electrode plate 60 and the oxygen electrode plate 62 forming the second unit fuel cell 52.

In the fuel cell shown in Fig.13, the four unit fuel cells 51 to 54 can be internally connected to one another in an optional connection mode by selectively severing or leaving the pins A to H provided to the oxygen electrode plates 21, 62, 72, 82 and to the hydrogen electrode plates 1, 60, 70 and 80 forming the four unit fuel cells 51 to 54.

If the pins A to H provided to the oxygen electrode plates and to the hydrogen electrode plates, forming the respective unit fuel cells 51 to 54, are selectively severed, as shown in Table 3:

**Table 3**

| electrodes | A | B | C | D | E | F | G | H |
|---|---|---|---|---|---|---|---|---|
| 21 | | | | | 0 | 0 | | |
| 1 | 0 | | 0 | 0 | | 0 | | |
| 60 | | | 0 | 0 | | 0 | 0 | |
| 62 | | 0 | | | | | | 0 |
| 72 | | | | | 0 | | | |
| 70 | | | 0 | 0 | | 0 | | |
| 80 | | | 0 | 0 | | | 0 | |
| 82 | | | | | | | | 0 |

two of the four unit fuel cells 51 to 54 making up the fuel cell are connected in series with each other, while the remaining two are connected in parallel with each other.

That is, in the oxygen electrode plate 21 forming the first unit fuel cell 51, only the pins for electrode interconnection E, F are left intact, with the remaining pins A, B, C, D, G and H being severed, whereas, in the oxygen electrode plate 72 forming the third unit fuel cell 53, only the pin for electrode interconnection E is left intact, with the remaining pins A, B, C, D, F, G and H being severed. In the hydrogen electrode plate 1 forming the first unit fuel cell 51, the pins for electrode interconnection A, C, D and F are left intact, with the remaining pins B, E, G and H being severed, whereas, in the hydrogen electrode plate 70, forming the third unit fuel cell 53, the pins for electrode interconnection C, D and F are left intact, with the remaining pins A, B, E, G and H being severed. It is noted that, in the oxygen electrode plate 21 and the hydrogen electrode plate 1, forming the first unit fuel cell 51, and in the oxygen electrode plate 72 and the hydrogen electrode plate 70, forming the third unit fuel cell 53, the pins among the facing pins for electrode interconnection A to H that are left without severing abut against one another for electrical connection. So, the oxygen electrode plate 21 forming the first unit fuel cell 51 and the oxygen electrode plate 72 forming the third unit fuel cell 53 are electrically interconnected by the pin for electrode interconnection E, whilst the hydrogen electrode plate 1 forming the first unit fuel cell 51 and the hydrogen electrode plate 70 forming the third unit fuel cell 53 are electrically interconnected by the pin for electrode interconnection F.

Moreover, in the hydrogen electrode plate 60 forming the second unit fuel cell 52, only the pins for electrode interconnection C, D, F and G are left intact, with the remaining pins A, B, C, E and H being severed, whereas, in the hydrogen electrode plate 80 forming the fourth unit fuel cell 54, the pins for electrode interconnection C, D and G are left intact, with the remaining pins A, B, E, F and H being severed. In the oxygen electrode plate 62 forming the second unit fuel cell 52, only the pins for electrode interconnection B and H are left intact, with the remaining pins A, C, D, E, F and G being severed, whereas, in the oxygen electrode plate 82, forming the fourth unit fuel cell 54, only the pin for electrode interconnection H is left intact, with the remaining pins A to G being severed. It is noted that, in the hydrogen electrode plate 60 and the oxygen electrode plate 62, forming the second unit fuel cell 52, and in the hydrogen electrode plate 80 and the oxygen electrode plate 82, forming the fourth unit fuel cell 54, the pins among the facing pins for electrode interconnection A to H that are left without severing abut against one another for electrical connection. So, the hydrogen electrode plate 60 forming the second unit fuel cell 52 and the hydrogen electrode plate 80 forming the fourth unit fuel cell 54 are electrically interconnected by the pin for electrode interconnection H, whilst the oxygen electrode plate 62 forming the second unit fuel cell 52 and the oxygen electrode plate 82 forming the fourth unit fuel cell 54 are electrically interconnected by the pin for electrode interconnection H.

As a result, the first unit fuel cell 51 and the third unit fuel cell 53 are connected in parallel with each other, whilst the second unit fuel cell 52 and the fourth unit fuel cell 54 are connected in parallel with each other.

The pin for electrode interconnection F formed on the oxygen electrode plate 21 forming the first unit fuel cell 51 is bent downwards, whilst the pin for electrode interconnection F formed on the hydrogen electrode plate 60 forming the second unit fuel cell 52 is bent upwards and connected to the pin F formed on the oxygen electrode plate 21, as a result of which a parallel connection of the first unit fuel cell 51 and the third unit fuel cell 53 is connected in series with a parallel connection of the second unit fuel cell 52 and the fourth unit fuel cell 54.

The pin for electrode interconnection A formed on the hydrogen electrode plate 1 forming the first unit fuel cell 51 and the pin for electrode interconnection B formed on the oxygen electrode plate 62 forming the second unit fuel cell 52 are separately connected to outputs.

Table 4 shows a method for selective severing of the pins for electrode interconnection A to H formed in the oxygen electrode plate and in the hydrogen electrode plate in case the four unit fuel cells 51 to 54 are all connected in series to constitute a fuel cell:

**Table 4**

| electrodes | A | B | C | D | E | F | G | H |
|---|---|---|---|---|---|---|---|---|
| 21 | | | | | 0 | | | |
| 1 | 0 | | 0 | 0 | | | | |
| 60 | | | 0 | 0 | | | 0 | |
| 62 | | 0 | | | | | | |
| 72 | | | | | | 0 | | |
| 70 | | | 0 | 0 | 0 | | | |
| 80 | | | 0 | 0 | | 0 | | |
| 82 | | | | | | | 0 | |

That is, in the oxygen electrode plate 21 forming the first unit fuel cell 51, only the pin for electrode interconnection E is left intact, with the remaining pins A, B, C, D, F, G and H being severed, whereas, in the hydrogen electrode plate 70 forming the third unit fuel cell 53, the pins for electrode interconnection C, D and E are left intact, with the remaining pins A, B, F, G and H being severed. The pin for electrode interconnection E formed on the oxygen electrode plate 21 forming the first unit fuel cell 51 is bent downwards, whilst the pin for electrode interconnection E formed on the hydrogen electrode plate 70 forming the is bent upwards and connected to the pin E formed on the oxygen electrode plate 21, as a result of which first unit fuel cell 51 and the third unit fuel cell 53 are connected in series with each other.

On the other hand, in the hydrogen electrode plate 60 forming the second unit fuel cell 52, only the pins for electrode interconnection C, D and G are left intact, with the remaining pins A, B, C, D, F, G and H being severed, whereas, in the oxygen electrode plate 82 forming the fourth unit fuel cell 54, only the pin for electrode interconnection G is left intact, with the remaining pins A, B, C, D, E, F and H being severed. The pin for electrode interconnection G formed on the oxygen electrode plate 82 forming the fourth unit fuel cell 54 is bent downwards, whilst the pin for electrode interconnection G formed on the hydrogen electrode plate 70 forming the is bent upwards and connected to the pin E formed on the oxygen electrode plate 82, as a result of which second unit fuel cell 52 and the fourth unit fuel cell 54 are connected in series with each other.

Also, in the oxygen electrode plate 72 forming the third unit fuel cell 53, only the pin for electrode interconnection F is left intact, with the remaining pins A, B, C, D, E, G and H being severed, whereas, in the hydrogen electrode plate 80 forming the fourth unit fuel cell 54, only the pins for electrode interconnection C, D and F are left intact, with the remaining pins A, B, E, G and H being severed. The pin for electrode interconnection F formed on the oxygen electrode plate 72 forming the third unit fuel cell 53 is bent downwards, whilst the pin for electrode interconnection F formed on the hydrogen electrode plate 80 forming the fourth unit fuel cell 54 is bent upwards and connected to the pin F formed on the oxygen electrode plate 72. Thus, the third unit fuel cell 53 and the fourth unit fuel cell 54 are connected in series with each other, as a result of which four unit fuel cells 51 to 54 are connected in series with each other.

Table 5 shows a method for selective severing of the pins for electrode interconnection A to H formed in the oxygen electrode plate and in the hydrogen electrode plate in case the four unit fuel cells 51 to 54 are all connected in parallel to constitute a fuel cell:

**Table 5**

| electrodes | A | B | C | D | E | F | G | H |
|---|---|---|---|---|---|---|---|---|
| 21 | | | | | 0 | | 0 | |
| 1 | 0 | | 0 | 0 | | | | |
| 60 | | | 0 | 0 | | 0 | | |
| 62 | | 0 | | | | | 0 | |
| 72 | | | | | 0 | | 0 | |
| 70 | | | 0 | 0 | | 0 | | 0 |
| 80 | | | 0 | 0 | | 0 | | 0 |
| 82 | | | | | | | 0 | |

That is, in the oxygen electrode plate 21 forming the first unit fuel cell 51, only the pins for electrode interconnection E, G are left intact, with the remaining pins A, B, C, D, F and H being severed, whereas, in the oxygen electrode plate 72 forming the third unit fuel cell 53, only the pins for electrode interconnection E and G are left intact, with the remaining pins A, B, C, D, F and H being severed. In the hydrogen electrode plate 1 forming the first unit fuel cell 51, the pins for electrode interconnection C, D, F and H are left intact, with the remaining pins A, B, E and G being severed, whereas, in the hydrogen electrode plate 70, forming the third unit fuel cell 53, the pins for electrode interconnection C, D, F and H are left intact, with the remaining pins A, B, E and G being severed. It is noted that, in the oxygen electrode plate 21 and the hydrogen electrode plate 1, forming the first unit fuel cell 51, and in the oxygen electrode plate 72 and the hydrogen electrode plate 70, forming the third unit fuel cell 53, the pins among the facing pins for electrode interconnection A to H that are left without severing abut against one another for electrical connection. So, the oxygen electrode plate 21 forming the first unit fuel cell 51 and the oxygen electrode plate 72 forming the third unit fuel cell 53 are electrically interconnected by the pin for electrode interconnection E, whilst the hydrogen electrode plate 1 forming the first unit fuel cell 51 and the hydrogen electrode plate 70 forming the third unit fuel cell 53 are electrically interconnected by the pin for electrode interconnection F.

Moreover, in the hydrogen electrode plate 60 forming the second unit fuel cell 52, only the pins for electrode interconnection C, D and F are left intact, with the remaining pins A, B, E, G and H being severed, whereas the pin for electrode interconnection F is bent upwards, with the pin for electrode interconnection F formed on the hydrogen electrode plate 1 forming the first unit fuel cell 51 being bent downwards for connection to the pin for electrode interconnection F of the hydrogen electrode plate 60. In the oxygen electrode plate 62 forming the second unit fuel cell 52, only the pins for electrode interconnection B and G are left intact, with the remaining pins A, C, D, E, F and H being severed, whereas the pin for electrode interconnection G is bent upwards, with the pin for electrode interconnection G formed on the oxygen electrode plate 21 forming the first unit fuel cell 51 being bent downwards for connection to the pin for electrode interconnection G of the oxygen electrode plate 62. So, the first unit fuel cell 51 and the second unit fuel cell 52 are connected together in parallel via pins for electrode interconnection F and G.

Moreover, in the hydrogen electrode plate 80 forming the fourth unit fuel cell 54, only the pins for electrode interconnection C, D and F are left intact, with the remaining pins A, B, E, G and H being severed, whereas the pin for electrode interconnection F is bent upwards, with the pin for electrode interconnection F formed on the hydrogen electrode plate 70 forming the third unit fuel cell 53 being bent downwards for connection to the pin for electrode interconnection F of the hydrogen electrode plate 80. In the oxygen electrode plate 82 forming the fourth unit fuel cell 54, only the pin for electrode interconnection G is left intact, with the remaining pins A, B, C, D, E, F and H being severed, whereas the pin for electrode interconnection G is bent upwards, with the pin for electrode interconnection G formed on the oxygen electrode plate 72 forming the third unit fuel cell 53 being bent downwards for connection to the pin for electrode interconnection G of the oxygen electrode plate 82. So, the third unit fuel cell 53 and the fourth unit fuel cell 54 are connected together in parallel via pins for electrode interconnection F and G.

So, the four unit fuel cells 51 to 54 are all connected to one another in parallel to form a fuel cell.

The fuel cell having the above structure can be constituted by interconnecting the four unit fuel cells 51 to 54 in optional connecting mode measly by selectively severing the pins for electrode interconnection A to H formed on the oxygen electrode plate and the hydrogen electrode plate forming the unit fuel cells 51 to 54 to leave the non-selected pins intact, without the necessity of providing conductors for connection.

The present invention can be modified within the scope of the invention without being limited to the above-described embodiments.

For example, the hydrogen electrode plate 1 and the hydrogen gas path forming plate 6 are superposed on and tightly bonded to each other so that the points of intersection 15 of the lattice 4 forming the square-shaped openings 2 and the triangular openings 3 of the hydrogen electrode plate 11 will be coincident with the center of the square-shaped openings 9 formed in the air flow path forming plate 6 and so that the points of intersections 16 of the lattice 10 forming the square-shaped openings 9, small-sized square-shaped openings 12 and the rectangular openings 13 will be coincident with the center of the square-shaped openings 2 of the formed in the hydrogen electrode plate 1. However, it is not mandatory to have the hydrogen electrode plate 1 and the hydrogen gas path forming plate 6 tightly bonded together in this manner since it is only sufficient if the hydrogen electrode plate 1 and the hydrogen gas path forming plate 6 are tightly bonded together so that each of the plural openings formed in the hydrogen electrode plate 1 communicates with two or more of the plural openings formed in the hydrogen gas flow path forming plate 6, with each of the plural openings formed in the hydrogen gas flow path forming plate 6 communicating with two or more of the plural openings formed in the hydrogen electrode plate 1.

Although the 13 square-shaped openings 2 and 8 triangular openings 3 are formed in the hydrogen electrode plate 1,the numbers of the square-shaped openings 2 and the triangular openings 3 may be set arbitrarily. Moreover, the shape of the openings is not limited to a square or triangular shape, but may also be polygonal, such as rectangular shape, or to a circular shape.

In addition, although the 12 square-shaped openings 9, four small-sized square-shaped openings and eight triangular openings 13 are formed in the hydrogen gas flow path forming plate 6, it is not mandatory to have the square-shaped openings 9 of the same size as the square-shaped openings 2 formed in the hydrogen electrode plate 1, such that the numbers of the square-shaped openings 9, small-sized square-shaped openings and the triangular openings 13 may be set optionally, while the shape of the openings is not limited to the square or rectangular shape, but may be polygonal, such as rec shape, or to a circular shape.

It is noted that the oxygen electrode plate 21 and the air flow path forming plate 26 are superposed on and tightly bonded to each other so that the points of intersection 35 of the lattice 24 forming the square-shaped openings 22 and the triangular openings 23 of the oxygen electrode plate 21 will be coincident with the center of the square-shaped openings 29 formed in the air flow path forming plate 26 and so that the points of intersections 36 of the lattice 30 forming the square-shaped openings 29 will be coincident with the center of the square-shaped openings 22 formed in the oxygen electrode plate 21. However, it is not mandatory to have the oxygen electrode plate 21 and the air flow path forming plate 26 tightly bonded together in this manner since it is only sufficient if the oxygen electrode plate 21 and the air flow path forming plate 26 are tightly bonded together so that each of the plural square-shaped openings 22 and the triangular openings 23 formed in the oxygen electrode plate 21 communicates with two or more of the plural square-shaped openings 29 formed in the air flow path forming plate 26, with each of the plural square-shaped openings 29 formed in the air flow path forming plate 26 communicating with two or more of the plural square-shaped openings 22 and the triangular openings 23 formed in the oxygen electrode plate 21.

Although the oxygen electrode plate 21 is shaped in the same way as the hydrogen electrode plate 1, and 13 square-shaped openings 29 and 8 triangular openings 23 are formed in the oxygen electrode plate 21, the numbers of the square-shaped openings 22 and the triangular openings 23 may be set arbitrarily. Moreover, the shape of the openings is not limited to a square or triangular shape, but may also be polygonal, such as rectangular shape, or to a circular shape. Moreover, the oxygen electrode plate 21 may be shaped similarly to the hydrogen electrode plate 1.

Although the 16 square-shaped openings 29 of the same size as the square-shaped openings 22 formed in the oxygen electrode plate 21 and the cut-outs 27a, 28a, 27b, 28b, 27c, 28c, 27d, 28d are formed in the air flow path forming plate 26, it is not mandatory to provide the square-shaped openings 29 of the same size as the square-shaped openings 22 formed in the oxygen electrode plate 21. Moreover, the number of the square-shaped openings 29 and the number of the cut-outs 27a, 28a, 27b, 28b, 27c, 28c, 27d, 28d formed in the air flow path forming plate 26 may be set arbitrarily. The shape of the openings formed in the air flow path forming plate 26 is not limited to the square shape, but may also be polygonal, such as rectangular or triangular, or may also be circular, while it is not mandatory to provide the cut-outs 27a, 28a, 27b, 28b, 27c, 28c, 27d, 28d shown in Fig.6.

The module retention plate 40 is tightly bonded to the air flow path forming plate 26 so that the center of the circular openings 41 formed in the module retention plate 40 will be coincident with the points of intersection 36 of the lattice forming the square-shaped openings 29 of the air flow path forming plate 26 and so that the points of intersection 43 of the lattice 42 forming the circular openings 41 of the module retention plate 40 will be coincident with the center of the square-shaped openings 29 of the air flow path forming plate 26, as shown in Fig.9. However, it is not mandatory to have the module retention plate 40 and the air flow path forming plate 26 tightly bonded together in this manner since it is only sufficient if the module retention plate 40 and the air flow path forming plate 26 are tightly bonded together so that each of the plural circular openings 41 formed in the module retention plate 40 and the triangular openings 23 formed in the oxygen electrode plate 21 communicates with two or more of the plural square-shaped openings 29 formed in the air flow path forming plate 26, with each of the plural square-shaped openings 29 formed in the air flow path forming plate 26 communicating with two or more of the plural circular openings 41 formed in the module retention plate 40.

Although 21 circular openings 41 are formed in the module retention plate 40, as shown in Fig.8, the number of the circular openings 41 formed in the module retention plate 40 may be set arbitrarily. The openings formed in the module retention plate 40 are not limited to circular shape but square-shaped, rectangular or triangular openings may be formed in the module retention plate 40.

Although the hydrogen electrode plate 1 is formed of stainless steel, it is not mandatory to form the hydrogen electrode plate 1 of stainless steel, such that it may be formed of hastelloy, nickel, molybdenum, copper, aluminum, iron, silver, gold, platinum, tantalum or titanium, or alloys of two or more of these materials.

Although the hydrogen gas flow path forming plate 6 is formed of polycarbonate, it is not mandatory to form the hydrogen gas flow path forming plate 6 of polycarbonate, such that the hydrogen gas flow path forming plate 6 may be formed of acrylic resin, ceramics, carbon, hastelloy, stainless steel, nickel, molybdenum, copper, aluminum, iron, silver, gold, platinum, tantalum or titanium, or alloys of two or more of these materials.

Although the oxygen electrode plate 21 is formed of stainless steel, it is not mandatory to form the oxygen electrode plate 21 of stainless steel, such that the oxygen electrode plate 21 may be formed of hastelloy, nickel, molybdenum, copper, aluminum, iron, silver, gold, platinum, tantalum or titanium, or alloys of two or more of these materials.

Although the air flow path forming plate 26 is formed of polycarbonate, it is not mandatory that the air flow path forming plate 26 be formed of polycarbonate, such that it may also be formed of acrylic acid, ceramics, carbon, hastelloy, stainless steel, nickel, molybdenum, copper, aluminum, iron, silver, gold, platinum, tantalum or titanium, in place of polycarbonate.

Although the eight rectangular pins for electrode interconnection A to H are formed on the four sides of each of the hydrogen electrode plate 1, 60, 70 or 80 and on each of the oxygen electrode plate 21, 62, 72, 82, the number, shape and the forming positions of the pins for electrode interconnection A to H may be selected and determined in optional manner. It is not mandatory that the eight pins for electrode interconnection A to H be formed on the four sides of each of the hydrogen electrode plate 1, 60, 70 or 80 and on each of the oxygen electrode plate 21, 62, 72, 82.

### Industrial Applicability

As described above, the fuel cell of the present invention is able to generate desired electromotive force on internal connection such that a small size as well as a reduced thickness may be achieved.

## Claims

1. A fuel cell comprising:
at least one unit fuel cell including a hydrogen gas path forming plate having a plurality of openings, an oxygen electrode plate having a proton conductor film and a plurality of openings and an air flow path forming plate having a plurality of openings, said hydrogen gas path forming plate, oxygen electrode plate and the air flow path forming plate layered together in this order;
at least two selectively disconnectable interconnection pins being formed on a peripheral portion of said hydrogen electrode plate and on a peripheral portion of said oxygen electrode plate.

2. The fuel cell according to claim 1 wherein said hydrogen electrode plate and the oxygen electrode plate are of substantially the rectangular shape and wherein said interconnection pins are formed on at least one side of said hydrogen electrode plate and the oxygen electrode plate.

3. The fuel cell according to claim 2 wherein said hydrogen electrode plate and the oxygen electrode plate are of substantially the rectangular shape and wherein said interconnection pins are formed on four sides of said hydrogen electrode plate and the oxygen electrode plate.

4. The fuel cell according to claim 1 wherein
said at least two interconnection pins formed on the peripheral portion of said hydrogen electrode plate and at least two interconnection pins formed on the peripheral portion of said oxygen electrode plate are formed in a case in which two of said unit fuel cells are apposed together,
said at least two interconnection pins formed on the peripheral portion of said hydrogen electrode plate and on the peripheral portion of said oxygen electrode plate are severed selectively,
so that said at least two interconnection pins formed on the peripheral portion of said hydrogen electrode plate of one of said unit fuel cells and said at least two interconnection pins formed on the peripheral portion of said hydrogen electrode plate of the other one of said unit fuel cells are connected electrically and
said at least two interconnection pins formed on the peripheral portion of said oxygen electrode plate of one of said unit fuel cells and said at least two interconnection pins formed on the peripheral portion of said oxygen electrode plate of the other one of said unit fuel cells are connected electrically.

5. The fuel cell according to claim 1 wherein said at least two interconnection pins formed on the peripheral portion of said hydrogen electrode plate 1 and on the peripheral portion of said oxygen electrode plate are selectively rupturable and selectively bendable.

6. The fuel cell according to claim 5 wherein
said at least two interconnection pins formed on the peripheral portion of said hydrogen electrode plate and at least two interconnection pins formed on the peripheral portion of said oxygen electrode plate are formed in a case in which two of said unit fuel cells are apposed together,
said at least two interconnection pins formed on the peripheral portion of said hydrogen electrode plate and on the peripheral portion of said oxygen electrode plate are severed or bent selectively,
so that said at least two interconnection pins formed on the peripheral portion of said hydrogen electrode plate of one of said unit fuel cells and said at least two interconnection pins formed on the peripheral portion of said hydrogen electrode plate of the other one of said unit fuel cells are connected electrically and
said at least two interconnection pins formed on the peripheral portion of said oxygen electrode plate of one of said unit fuel cells and said at least two interconnection pins formed on the peripheral portion of said oxygen electrode plate of the other one of said unit fuel cells are connected electrically.

7. The fuel cell according to claim 5 wherein
said at least two interconnection pins formed on the peripheral portion of said hydrogen electrode plate and at least two interconnection pins formed on the peripheral portion of said oxygen electrode plate are formed in a case in which two of said unit fuel cells are stacked together with said hydrogen gas flow path forming plate in common,
said at least two interconnection pins formed on the peripheral portion of said hydrogen electrode plate and on the peripheral portion of said oxygen electrode plate are bent selectively,
so that said at least two interconnection pins formed on the peripheral portion of said hydrogen electrode plate of one of said unit fuel cells and said at least two interconnection pins formed on the peripheral portion of said hydrogen electrode plate of the other one of said unit fuel cells are connected electrically and
said at least two interconnection pins formed on the peripheral portion of said oxygen electrode plate of one of said unit fuel cells and said at least two interconnection pins formed on the peripheral portion of said oxygen electrode plate of the other one of said unit fuel cells are connected electrically.

8. The fuel cell according to claim 1 further comprising:
a module retention plate having a plurality of openings, said module retention plate being provided on the opposite side of said air flow path forming plate forming said unit fuel cell with respect to said oxygen electrode plate.

9. The fuel cell according to claim 1 wherein said hydrogen gas flow path forming plate has a thickness of 0.01 mm to 1 mm.

10. The fuel cell according to claim 1 wherein said hydrogen electrode plate has a thickness of 0.01 mm to 1 mm.

11. The fuel cell according to claim 1 wherein said air flow path forming plate has a thickness of 0.01 mm to 0.5 mm.

12. The fuel cell according to claim 1 wherein said oxygen electrode plate has a thickness of 0.01 mm to 1 mm.

13. The fuel cell according to claim 1 wherein said hydrogen gas flow path forming plate is formed of a material selected from the group consisting of polycarbonate, acrylic resin, ceramics, carbon, hastelloy, stainless steel, nickel, molybdenum, copper, aluminum, iron, silver, gold, platinum, tantalum and titanium.

14. The fuel cell according to claim 1 wherein said hydrogen electrode plate is formed of a material selected from the group consisting of hastelloy, stainless steel, nickel, molybdenum, copper, aluminum, iron, silver, gold, platinum, tantalum and titanium and alloys of two or more of said materials.

15. The fuel cell according to claim 1 wherein said air flow path forming plate is plate is formed of a material selected from the group consisting of polycarbonate, acrylic resin, ceramics, carbon, hastelloy, stainless steel, nickel, molybdenum, copper, aluminum, iron, silver, gold, platinum, tantalum and titanium.

16. The fuel cell according to claim 1 wherein said oxygen electrode plate is formed of a material selected from the group consisting of hastelloy, stainless steel, nickel, molybdenum, copper, aluminum, iron, silver, gold, platinum, tantalum and titanium and alloys of two or more of said materials.
